(19) Europäisches Patentamt / European Patent Office / Office européen des brevets

(11) **EP 1 727 272 B1**

(12) **FASCICULE DE BREVET EUROPEEN**

(45) Date de publication et mention
de la délivrance du brevet:
**15.01.2014 Bulletin 2014/03**

(51) Int Cl.:
***H02P 21/00*** *(2006.01)*

(21) Numéro de dépôt: **06290771.2**

(22) Date de dépôt: **12.05.2006**

(54) **Procédé et unité de commande à réponse pile d'une machine asynchrone, support d'enregistrement pour ce procédé**

Verfahren und Vorrichtung zur Deadbeat-Steuerung einer Asynchronmaschine, Speichermedium für dieses Verfahren

Deadbeat method and control unit for an asynchronous machine, storage means for said method

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.05.2005 FR 0505137**

(43) Date de publication de la demande:
**29.11.2006 Bulletin 2006/48**

(73) Titulaire: **ALSTOM Transport SA**
**92300 Levallois-Perret (FR)**

(72) Inventeur: **Alacoque, Jean**
**69360 Communay (FR)**

(74) Mandataire: **Blot, Philippe Robert Emile et al**
**Cabinet Lavoix**
**2, place d'Estienne d'Orves**
**75441 Paris Cedex 09 (FR)**

(56) Documents cités:
**EP-A- 1 045 514**

• **SHENG-MING YANG ET AL: "A current control technique for voltage-fed induction motor drives" INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA, IEEE, US, vol. 3, 29 novembre 1999 (1999-11-29), pages 1380-1385, XP010366743 ISBN: 0-7803-5735-3**
• **KENNY B H ET AL: "STATOR- AND ROTOR-FLUX-BASED DEADBEAT DIRECT TORQUE CONTROL OF INDUCTION MACHINES" IEEE TRANSACTIONS ON INDUSTRY APPLICATIONS, IEEE SERVICE CENTER, PISCATAWAY, NJ, US, vol. 39, no. 4, juillet 2003 (2003-07), pages 1093-1101, XP001171060 ISSN: 0093-9994**

**Description**

La présente invention concerne un procédé et une unité de commande à réponse pile d'une machine électrique tournante asynchrone, et un support d'enregistrement pour ce procédé.

Dans la suite de la description, le terme « moteur » désigne une machine électrique tournante asynchrone. En préambule à la description qui va suivre, on rappelle qu'une machine électrique tournante asynchrone est un moteur isotrope, c'est-à-dire dont les inductances directes sont égales aux inductances en quadrature. Pour ces machines isotropes, les dimensions m et n qui sont introduites ci-dessous sont réduites par l'écriture des matrices et des vecteurs dans le plan complexe.

Les procédés de commande à réponse pile sont également connus sous les termes anglais « Deadbeat control ».

Ces procédés peuvent utiliser le formalisme des équations d'état (« State-Space » equations) également connu. Ce formalisme est basé sur le principe que l'état d'un moteur, est décrit intégralement par la connaissance des valeurs prises par les grandeurs représentant ses degrés de liberté. Cet état peut être caractérisé par un vecteur d'état $\vec{X}$ de dimension $\underline{n}$ égale au nombre de degrés de liberté. L'évolution de la machine par l'effet d'une commande représentée par un vecteur de commande $\vec{V}$ de dimension m propre à contrôler la machine est alors décrit par le système linéaire d'équations d'état, connu en automatique, suivant :

$$\dot{\vec{X}} = A \cdot \vec{X} + B \cdot \vec{V} \tag{1}$$

où:

- $\dot{\vec{X}}$ est la dérivée temporelle du vecteur d'état X

- $\vec{V}$ est le vecteur de commande instantané

- A est une matrice d'évolution libre de la machine en absence de commande, de dimension n.n, et
- B est une matrice de commande de dimension n.m.

Dans le cas des moteurs isotropes, les dimensions n et m sont réduites par l'écriture des matrices et des vecteurs dans le plan complexe.

Ces deux matrices A et B représentent un modèle linéaire du moteur. Elles sont obtenues à partir des équations différentielles électrotechniques du moteur, pour un état cinématique donné. Si le modèle n'est pas linéaire, il est nécessaire de le linéariser autour d'un point de fonctionnement et donc de disposer de plusieurs modèles, dans ce cas.

Pour connaître l'état du moteur, au bout d'un intervalle T d'application continue d'un vecteur moyen de commande $\overline{\vec{V}}$, il faut intégrer la relation (1) entre deux instants : $t_n$ et $t_{n+1}$ espacés temporellement l'un de l'autre par l'intervalle T. Le résultat peut être mis sous la forme connue d'un système discret d'équations d'état :

$$\overline{X}(t_{n+1}) = F(T) \cdot \overline{X}(t_n) + G(T) \cdot \overline{\overline{V}}(t_{n \to n+1}) \tag{2}$$

où :

- F(T) est une matrice de transition du moteur de dimension n.n, définie par $F = e^{A \cdot T}$,
- G(T) est une matrice de commande de dimension n.m définie par $G = A-1 \cdot (e^{A \cdot T} - I_{nn}) \cdot B$ où la matrice $I_{nn}$ est la matrice unité de dimension n.n.

- $\overline{\vec{X}}(t_{n+1})$ et $\overline{\vec{X}}(t_n)$ sont les vecteurs d'état aux instants $t_{n+1}$ et $t_n$ respectivement
- $\overline{\overline{\vec{V}}}((t_{n \to n+1})$ est le vecteur moyen de commande appliqué pendant l'intervalle T, c'est-à-dire de l'instant $t_n$ à l'instant $t_{n+1}$

Le vecteur moyen de commande $\overline{\overline{V}}$ est soit un vecteur instantané appliqué continûment pendant l'intervalle T, soit la moyenne d'une succession temporelle de vecteurs de commande instantanés $\overrightarrow{V}$ directement appliqués au moteur pendant l'intervalle T. Dans le cas d'une succession temporelle de vecteurs instantanés chaque vecteur instantané est appliqué pendant un laps de temps très court devant les constantes de temps du moteur, de sorte que l'application de cette succession de vecteurs instantanés produit les mêmes effets que l'application continue d'un seul vecteur instantané, de phase et d'amplitude choisies pendant le même intervalle de temps T.

Une succession de vecteurs instantanés est souvent utilisée, car la plupart des dispositifs d'alimentation de moteurs ne peuvent produire qu'un nombre limité d'amplitudes et de phases pour les vecteurs instantanés de commande. Par exemple, un onduleur triphasé ne peut produire que six vecteurs instantanés, non nuls, de commande différents. Dès lors, pour pouvoir obtenir un vecteur de commande d'amplitude et de phase quelconque à partir d'un onduleur triphasé, il est habituel d'appliquer directement au moteur une succession temporelle de vecteurs instantanés de commande dont la moyenne, notée $\overline{\overline{V}}$, entre les instants $t_n$ et $t_{n+1}$ est égale à un vecteur moyen de commande dont la phase et l'amplitude sont choisies de façon quelconque. Par exemple, un procédé de modulation de largeur d'impulsions permet d'obtenir un vecteur moyen de commande dont la phase et l'amplitude peuvent être choisies de façon quelconque à partir d'un dispositif d'alimentation uniquement apte à produire un nombre limité d'amplitudes de phases pour les vecteurs instantanés de commande.

Dans la suite de la description, à moins d'indications contraires, les termes « vecteur de commande » signifient vecteur moyen de commande.

Un vecteur de commande est typiquement un vecteur de tension permettant d'appliquer une tension spécifique simultanément sur chaque phase du moteur.

Si l'on connaît un modèle (A, B) du moteur et un état initial $\overrightarrow{X}_0 = \overrightarrow{X}(t_n)$ que l'on peut mesurer par exemple, ou estimer à partir d'un observateur comme le filtre de Kalman, il devient possible de prédire le nouvel état $\overrightarrow{X}_p = \overrightarrow{X}(t_n + T)$ après l'application continue du vecteur de commande $\overline{\overline{V}}$ pendant l'intervalle T.

A contrario, il est possible de calculer le vecteur de commande V à appliquer pour que l'état prédit coïncide avec un état de consigne, ce qui revient à remplacer $\overrightarrow{X}_p$ par un état de consigne $\overrightarrow{X}_c$. Le système discrèt d'équations d'état devient alors :

$$\overrightarrow{X}_c = F(T) \cdot \overrightarrow{X}_0 + G(T) \cdot \overline{\overline{V}} \qquad\qquad (3)$$

Toutefois, la matrice G(T) n'est pas carrée et n'est donc pas inversible, de sorte qu'il n'est pas connu de calculer de façon analytique le vecteur de commande $\overline{\overline{V}}$ solution du système d'équations (3).

Dès lors, classiquement, des approximations sont réalisées pour inverser le système d'équations et calculer le vecteur de commande. Dans le cas de moteurs tournants ou de machines électriques tournantes dont le flux magnétique varie lentement, l'approximation consiste à supposer le flux magnétique du moteur établi, en régime permanent.

Grâce à une telle approximation, il est alors possible de calculer un vecteur de commande permettant d'atteindre un couple de consigne à l'expiration de l'intervalle T. Un exemple d'un tel procédé de commande à réponse pile est donné dans la demande de brevet EP-A-1 045 514.

Toutefois, en pratique, lorsqu'un tel procédé de commande à réponse pile est mis en oeuvre, le moteur se démagnétise progressivement. Ainsi ces procédés de commande présentent l'inconvénient qu'il est nécessaire d'ajouter une boucle d'asservissement du flux magnétique du moteur sur un flux de consigne pour éviter la démagnétisation de ce moteur lors du procédé de commande à réponse pile.

L'invention vise à remédier à cet inconvénient en proposant un procédé de commande à réponse pile dans lequel il n'est pas nécessaire de mettre en oeuvre une boucle additionnelle d'asservissement du flux magnétique du moteur.

Le document intitulé "A current control technique for Voltage-Fed Induction Mortor drives" de Sheng-Ming Yang et al., publié dans industrial Electronics Society, 1999 IECON'99 Proceedings, the 25th annual conference of the IEEE, San Jose 29 November - 3 December 1999, décrit un système de commande à réponse pile comportant une boucle de contre-réaction.

La réponse pile est mise en oeuvre dans la boucle de contre-réaction et le vecteur d'état d'évolution du moteur régulé est constitué uniquement par le courant statorique.

Le but de l'invention est d'améliorer la précision de l'asservissement.

L'invention a donc pour objet un procédé de commande à réponse pile d'un moteur dans lequel le flux magnétique du moteur dépend du courant d'alimentation de ce moteur, ce procédé comportant :

a) une étape d'établissement d'un courant de consigne permettant d'atteindre, à la fin de l'intervalle T à la fois la consigne de force mécanique et un flux magnétique de consigne, ce courant de consigne étant établi à partir d'une relation reliant le courant de consigne, le flux magnétique de consigne et les valeurs initiales du courant et du flux magnétique au début de l'intervalle T, et

b) une étape de calcul du vecteur de commande à appliquer continûment pendant l'intervalle T pour obtenir à l'expiration de cet intervalle T un courant égal au courant de consigne établi lors de l'étape a).

Contrairement au procédé de commande à réponse pile connu, le procédé ci-dessus établit d'abord une consigne de courant permettant d'atteindre à la fois la consigne de force mécanique et un flux magnétique de consigne avant de calculer le vecteur de commande qui permet d'atteindre ce courant de consigne. Grâce à cela, la magnétisation du moteur est maintenue sans qu'il soit nécessaire pour cela de rajouter une boucle d'asservissement du flux magnétique puisque le flux magnétique est maintenu égal au flux magnétique de consigne.

Les modes de réalisation de ce procédé de commande peuvent comporter une ou plusieurs des caractéristiques suivantes :

- le courant de consigne est une solution de la relation complexe suivante :

$$
\begin{aligned}
&(a_2 \cdot p_{11} - a_1 \cdot p_{21}) \cdot \dot{I}_c + (a_2 \cdot p_{12} - a_1 \cdot p_{22}) \cdot \vec{\Phi}_c = \\
&(a_2 \cdot e_1 \cdot p_{11} - a_1 \cdot e_2 \cdot p_{21}) \cdot \dot{I}_0 + (a_2 \cdot e_1 \cdot p_{12} - a_1 \cdot e_2 \cdot p_{22}) \cdot \vec{\Phi}_0
\end{aligned}
$$

où :

- $p_{ij}$ sont les coefficients de l'inverse d'une matrice P de vecteurs propres définie par la relation suivante $A = P \cdot D \cdot P^{-1}$, où D est la matrice diagonale constituée des valeurs propres $\mu_i$ de la matrice A, $P^{-1}$ est l'inverse de la matrice P, et la matrice A est la matrice d'évolution libre du moteur dans un système linéaire d'équations d'état modélisant le fonctionnement du moteur,
- les coefficients $a_i$ sont les coefficients d'une matrice C définie par la relation suivante $C = D^{-1} \cdot (e^{D \cdot T} - I) \cdot (P^{-1} B)$, où la matrice I est la matrice unité et la matrice B est la matrice de commande du moteur dans le système linéaire d'équations d'état,
- les vecteurs $\vec{\Phi}_0$ et $\dot{I}_0$ sont respectivement les vecteurs représentant l'état initial au début de l'intervalle T du courant et du flux magnétique du moteur,
- les vecteurs $\dot{I}_c$ et $\vec{\Phi}_c$ sont les vecteurs respectivement de courant de consigne et de flux magnétique de consigne, et
- les coefficients $e_i$ sont définis par la relation suivante $e_i = e^{\mu_i \cdot T}$ ;

- le vecteur de commande est la solution exacte du système discret d'équations d'état du moteur suivant :

$$
\vec{X}_c = F(T) \cdot \vec{X}_0 + G(T) \cdot \vec{V}
$$

où :

- le vecteur $\vec{X}_0$ est un vecteur d'état définissant l'état initial du courant et du flux magnétique du moteur au début de l'intervalle T,

- le vecteur $\vec{X}_c$ est un vecteur d'état de consigne définissant le courant de consigne et le flux magnétique de consigne pour le moteur,

- le vecteur $\vec{\vec{V}}$ est le vecteur de commande du moteur,
- la matrice F(T) est une matrice de transition du moteur définie par la relation F = e$^{A \cdot T}$, où A est la matrice d'évolution libre du moteur dans un système linéaire d'équations d'état modélisant le fonctionnement du moteur, et
- la matrice G(T) est une matrice de commande du moteur dont la valeur est fonction de la valeur de l'intervalle T ;

- le vecteur de commande est le résultat de la relation suivante :

$$\vec{\vec{V}} = e^{i \cdot \theta_0} \cdot \frac{e^{\mu_1 \cdot T}\left[p_{11}\left(I_{0d_0} + i \cdot I_{0q_0}\right) + p_{12} \cdot \Phi_{0d_0}\right] \cdot \left[p_{21} \cdot \left(I_{cd} + i \cdot I_{cq}\right) + p_{22} \cdot \Phi_{cd}\right] - e^{\mu_2 \cdot T} \cdot \left[p_{21} \cdot \left(I_{0d_0} + i \cdot I_{0q_0}\right) + p_{22} \cdot \Phi_{0d_0}\right] \cdot \left[p_{11} \cdot \left(I_{cd} + i \cdot I_{cq}\right) + p_{12} \cdot \Phi_{cd}\right]}{a_2 \cdot \left[p_{11} \cdot \left(I_{cd} + i \cdot I_{cq}\right) + p_{12} \cdot \Phi_{cd}\right] - a_1 \cdot \left[p_{21} \cdot \left(I_{cd} + i \cdot I_{cq}\right) + p_{22} \cdot \Phi_{cd}\right]}$$

où :

- $\theta_0$ est la position angulaire d'un repère initial dont l'axe des abscisses est aligné sur un vecteur de flux magnétique initial du moteur au début de l'intervalle T,
- les coefficients $p_{ij}$ sont les coefficients de l'inverse d'une matrice P de vecteurs propres définie par la relation A = P$\cdot$ D $\cdot$ P$^{-1}$ , où D est la matrice diagonale constituée des valeurs propres $\mu_i$ de la matrice A, P$^{-1}$ est l'inverse de la matrice P, et la matrice A est la matrice d'évolution libre du moteur dans un système linéaire d'équations d'état modélisant le fonctionnement du moteur,
- $I_{0d_0}$, $I_{0q_0}$ sont les coordonnées du vecteur de courant initial au début de l'intervalle T dans un repère initial dont l'axe des abscisses est aligné sur la direction du vecteur de flux magnétique initial,
- $\Phi_{0d_0}$ , est l'abscisse du vecteur de flux magnétique initial dans le repère initial,
- $I_{cd}$, $I_{cq}$ sont les coordonnées du vecteur de courant de consigne à la fin de l'intervalle T, dans un repère de consigne dont l'axe des abscisses est aligné sur la direction du vecteur de flux magnétique de consigne.
- $\Phi_{cd}$ est l'abscisse du vecteur de flux magnétique de consigne dans le repère de consigne ;

- le vecteur d'état du système linéaire d'équations d'état modélisant le fonctionnement du moteur est formé d'un vecteur de courant statorique et d'un vecteur de flux magnétique rotorique.

Les modes de réalisation de ce procédé présentent en outre les avantages suivants :

- le fait que le courant de consigne soit une solution de l'équation donnée ci-dessus permet de garantir que ce courant de consigne permettra d'atteindre à l'expiration de l'intervalle T à la fois la consigne de force mécanique et le flux de consigne souhaité ;
- le fait que le vecteur de commande soit également la solution exacte du système d'équations d'état donnée ci-dessus, permet également de garantir que le procédé de commande atteindra à l'expiration de l'intervalle T le courant de consigne fixé ;
- le vecteur de courant statorique est facilement mesurable, ce qui facilite la mise en oeuvre du procédé de commande ; et
- le vecteur de flux magnétique rotorique varie lentement, ce qui facilite son estimation à l'aide d'un observateur.

L'invention a également pour objet une unité de commande à réponse pile d'un moteur tournant commandable à partir du courant d'alimentation de ce moteur, cette unité comporte :

- un module d'établissement d'un courant de consigne permettant d'atteindre à la fin d'un intervalle T à la fois une consigne de force mécanique et un flux magnétique de consigne, ce courant de consigne étant établi à partir d'une relation reliant le courant de consigne, le flux magnétique de consigne, et des valeurs initiales du courant et du flux magnétique au début de l'intervalle T, et
- un module de calcul d'un vecteur de commande à appliquer continûment pendant l'intervalle T pour obtenir à l'expiration de l'intervalle T un courant égal au courant de consigne établi par le module d'établissement.

L'invention a également pour objet un support d'enregistrement d'informations comportant des instructions pour l'exécution du procédé de commande ci-dessus, lorsque ces instructions sont exécutées par un calculateur électronique.

L'invention sera mieux comprise à la lecture de la description qui va suivre, donnée uniquement à titre d'exemple faite en se référant aux dessins sur lesquels :

- la figure 1 est un schéma électronique équivalent d'un moteur électrique asynchrone ;
- les figures 2A et 2B définissent respectivement un repère initial et un repère de consigne utilisé lors de la mise en oeuvre d'un procédé de commande à réponse pile ;
- la figure 3 est une illustration schématique de l'architecture d'un système de commande d'un moteur électrique asynchrone triphasé ; et
- la figure 4 est un organigramme d'un procédé de commande à réponse pile mis en oeuvre dans le système de la figure 3.

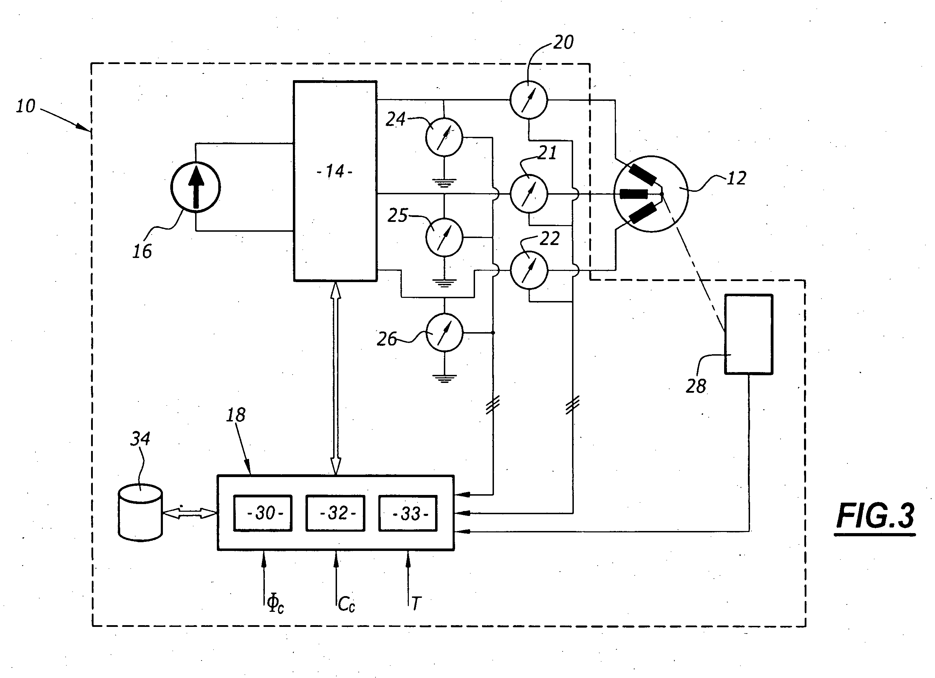

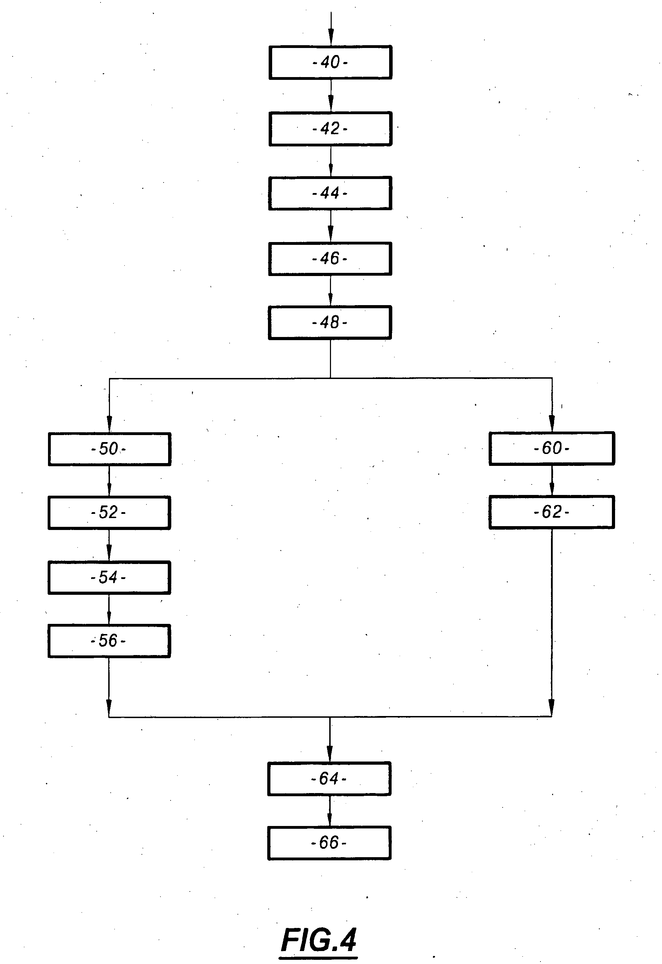

Afin de décrire en détail un exemple concret de réalisation (partie III) d'un système et d'un procédé de commande à réponse pile en regard des figures 3 et 4, la théorie mathématique ayant permis de développer ce système et ce procédé va être présentée dans le cas d'une machine électrique tournante isotrope (partie I), puis les relations générales ainsi développées seront détaillées dans le cas particulier d'un moteur électrique asynchrone (partie II).

Les notations introduites dans la partie introductive de cette description sont également utilisées dans la suite de cette description.

Partie I) : Mise en équation de la commande à réponse pile dans le cas général

I.1 Expression du système d'équations d'état dans une base de vecteurs propres de la machine :

Pour calculer le vecteur de commande de la machine électrique tournante isotrope, on supposera que le système (3) est commandable au sens de l'automatique.

Les deux matrices $F(T)$ et $G(T)$ ne sont en général pas connues de manière formelle. Il est possible de les déterminer de différentes façons. La méthode de calcul basée sur le calcul des valeurs propres du système : $\mu_j\, j \in \{1,n\}$, qui va être décrite ci-dessous permet de mettre en évidence une solution analytique simple et exacte, pour autant que le modèle du système soit suffisamment bien connu.

Soit D la matrice diagonale de A dont la diagonale est constituée des n valeurs propres $\mu_i$ et P, la matrice des vecteurs propres ou matrice de passage telle que :

$$A = P \cdot D \cdot P^{-1} \tag{4}$$

La matrice de transition peut alors se calculer simplement :

$$F = e^{A \cdot T} = P \cdot e^{D \cdot T} \cdot P^{-1} \tag{5}$$

expression dans laquelle : $e^{D \cdot T}$ est la matrice diagonale constituée des exponentielles des valeurs propres $\mu_i$ multipliées par l'intervalle T.

Avec cette méthode, le système discret (3) d'équations d'état s'écrit :

$$\vec{X}_c = P \cdot e^{D \cdot T} \cdot P^{-1} \cdot \vec{X}_0 + A^{-1} \cdot \left( P \cdot e^{D \cdot T} \cdot P^{-1} - I \right) \cdot B \cdot \overline{\overline{V}} \tag{6}$$

En multipliant les deux membres à gauche par $P^{-1}$ , on obtient après quelques transformations :

$$\left[ P^{-1} \cdot \vec{X}_c \right] = e^{D \cdot T} \cdot \left[ P^{-1} \cdot \vec{X}_0 \right] + D^{-1} \cdot \left( e^{D \cdot T} - I \right) \cdot \left[ P^{-1} \cdot B \right] \cdot \overline{\overline{V}} \tag{7}$$

Cette nouvelle représentation discrète d'état de la machine est intéressante par sa simplicité : $e^{D \cdot T}$ et $D^{-1} \cdot (e^{D \cdot T} - I)$ sont des matrices diagonales, très faciles à calculer formellement à partir des valeurs propres $\mu_i$, pour une

machine donnée. En effet, leur diagonale respective est composée respectivement des éléments :

$$e^{\mu_j \cdot T} \text{ et } \frac{e^{\mu_j \cdot T} - 1}{\mu_j} \text{ pour } j \in \{1,...,n\} \qquad (8)$$

Cette formulation fait apparaître la projection des vecteurs d'états dans l'espace des vecteurs propres, donc des vecteurs « propres » d'état : $\overrightarrow{\Psi} = P^{-1} \cdot \overrightarrow{X}$, ainsi qu'une matrice « propre » de commande: [P⁻¹ ·B]. Comme les valeurs propres, qui caractérisent le comportement d'un système, ces vecteurs propres d'état ont une signification physique particulière en ce que leurs coordonnées, les états « propres », sont découplés par rapport à la commande, puisque exprimés dans la base des vecteurs propres. C'est ce que traduit encore, le fait que deux des matrices soient diagonales.

Avec le changement de variable suivant, l'équation (7) d'état se simplifie :

$$\overrightarrow{\Psi}_c = P^{-1} \cdot \overrightarrow{X}_c \qquad (8)$$

$$\overrightarrow{\Psi}_0 = P^{-1} \cdot \overrightarrow{X}_0 \qquad (9)$$

$$C = D^{-1} \cdot \left(e^{D \cdot T} - I\right) \cdot \left[P^{-1} \cdot B\right] \qquad (10)$$

$$\overrightarrow{\Psi}_c = e^{D \cdot T} \cdot \overrightarrow{\Psi}_0 + C \cdot \overline{\overline{V}} \qquad (11)$$

Le calcul du vecteur de commande consiste alors à renseigner l'état propre initial $\overrightarrow{\Psi}_0$ à partir de mesures et/ou d'observateurs pour les grandeurs qui ne seraient pas accessibles, puis à renseigner l'état propre de consigne $\overrightarrow{\Psi}_c$ en fonction des objectifs à réaliser, et enfin à calculer le vecteur de commande qui permettra d'atteindre au bout d'un intervalle de temps T choisi, l'état propre de consigne.

Pour une machine électrique tournante, il est pratique de choisir un vecteur d'état $\overrightarrow{X}$ composé de l'état du courant d'alimentation de la machine et de l'état du flux magnétique de la machine, puisque l'objectif est d'obtenir une force mécanique. En effet, les amplitudes et l'angle entre un vecteur de courant et un vecteur de flux magnétique permettent de traduire, par simple produit vectoriel, un objectif de force, en objectifs de coordonnées de ces vecteurs dans un repère choisi pour simplifier leurs expressions. Ici ce repère est un repère orthonormé dont l'axe des abscisses est aligné sur le vecteur de flux magnétique. Dans ce cas, le produit vectoriel de la loi de Laplace s'exprime par le produit du module du flux magnétique, par le module de la projection du vecteur de courant sur l'axe des ordonnées au même instant, à une constante près dépendant de la machine. De plus, le produit du module du flux magnétique, par le module de la projection du vecteur de courant sur l'axe des abscisses au même instant, définit le produit scalaire des vecteurs de courant et de flux magnétique et donc l'énergie magnétique de la machine dans une représentation de Park, à une constante multiplicative près dépendant de la machine.

Une matrice $\Gamma_0$ est définie comme étant la matrice de projection du vecteur de courant dans un repère initial dont l'axe des abscisses est aligné sur le vecteur de flux magnétique initial. Par initial on désigne ici l'instant $t_n$ marquant le début de l'intervalle T. On peut écrire cette matrice sous la forme du produit de deux matrices $\Gamma_c$ et $\Gamma_T$ permettant de projeter, pour la première, le vecteur de courant dans un repère de consigne dont l'axe des abscisses est aligné sur le vecteur de flux magnétique de consigne et, pour la seconde, le vecteur de courant de ce repère de consigne vers le repère initial. Cette dernière transformation $\Gamma_T$ dépend bien sûr de la valeur de l'intervalle T, puisqu'elle permet de passer du repère de consigne au repère initial (système supposé causal avec cette représentation). La relation suivante est donc vérifiée.

$$\Gamma_T \cdot \Gamma_c = \Gamma_0 \qquad (12)$$

En combinant, les relations (11) et (12), on obtient :

$$\Gamma_T \cdot \left[ \Gamma_c \cdot \vec{\Psi}_c \right] = e^{D \cdot T} \cdot \left[ \Gamma_0 \cdot \vec{\Psi}_0 \right] + \left[ \Gamma_0 \cdot C \right] \cdot \overline{\overline{V}} \qquad (13)$$

Ce formalisme fait apparaître les vecteurs propres d'état de consigne $\Gamma_c \cdot \vec{\Psi}_c$ et initial $\Gamma_0 \cdot \vec{\Psi}_0$, exprimés respectivement dans le repère de consigne et dans le repère initial, ce qui permet d'y exprimer très simplement les produits vectoriel et scalaire.

Les matrices (D, P, P$^{-1}$, B) dépendent de la machine et peuvent être calculées de manière analytique ou numérique. L'intervalle de commande T est choisi par l'intermédiaire d'autres critères. Le vecteur $\vec{\Psi}_0$ dépend de l'état initial de la machine au début de l'intervalle T et le vecteur $\vec{\Psi}_c$ est le vecteur de consigne. Ces deux vecteurs $\vec{\Psi}_0$, $\vec{\Psi}_c$ doivent être recalculés à chaque étape de commande, ainsi que les trois matrices de projection : ($\Gamma_0$, $\Gamma_c$, $\Gamma_T$)·$\Gamma_T$ peut faire partie des variables inconnues à déterminer en fonction des mesures et/ou des consignes selon l'application.

I.2 Expression du courant de consigne :

Le vecteur de consigne est ici défini pour permettre à la fois d'atteindre une consigne $F_{mc}$ de force mécanique, exprimée par exemple sous la forme d'une consigne primaire $C_c$ de couple, et un flux magnétique $\vec{\Phi}_c$ de consigne à atteindre à l'expiration de l'intervalle T.

Ici seul le module $\|\Phi_c\|$ du flux $\vec{\Phi}_c$ de consigne est nécessaire.

Dans un plan défini par les vecteurs de courant $\vec{I}$ et le vecteur d'induction magnétique $\vec{B}$, on choisit pour définir l'état de la machine, un vecteur d'état de dimension quatre au minimum :

$$\vec{X} = \begin{vmatrix} \vec{I} \\ \vec{\Phi} \end{vmatrix} \qquad (14)$$

Ce vecteur d'état, appliqué aux consignes, va être défini à partir d'un état magnétique et d'une force mécanique.

Pour simplifier le formalisme des calculs dans le cas des machines asynchrones isotropes, on peut représenter les vecteurs de courant et de flux par un nombre complexe présentant chacun deux coordonnées dans un repère orthonormé direct dont l'axe des abscisses réelles a la direction et le sens du vecteur d'induction magnétique, donc du vecteur de flux magnétique.

Le système (13) reste d'ordre quatre, mais il est maintenant représenté par un système d'ordre deux en complexe.

On définit par $\mu_1$ et $\mu_2$ les deux valeurs propres complexes de la matrice complexe d'évolution du système discret d'équations d'état, la matrice de commande complexe et la matrice de passage inverse complexe peuvent s'écrire avec ces dimensions comme suit :

$$B = \begin{vmatrix} b_1 \\ b_2 \end{vmatrix} \qquad\qquad (15)$$

$$P^{-1} = \begin{vmatrix} p_{11} & p_{12} \\ p_{21} & p_{22} \end{vmatrix} \text{ avec } P_{jk} \text{ fonction de } \mu_1, \mu_2 \qquad\qquad (16)$$

Le vecteur de commande $\overline{\overline{V}}$ est d'ordre un en complexe et s'exprime par la relation $\overline{\overline{V}} = \overline{V}_\alpha + i \cdot \overline{V}_\beta$ Il est avantageux de choisir les coordonnées du repère $(\alpha, \beta)$ fixe par rapport à l'organe de commande.

Avec ces définitions, $C = D^{-1} \cdot (e^{D \cdot T} - I) \cdot [P^{-1} - B]$, devient :

$$C = \begin{vmatrix} \dfrac{e^{\mu_1 \cdot T} - 1}{\mu_1} \cdot (p_{11} \cdot b_1 + p_{12} \cdot b_2) \\[3mm] \dfrac{e^{\mu_2 \cdot T} - 1}{\mu_2} \cdot (p_{21} \cdot b_1 + p_{22} \cdot b_2) \end{vmatrix} = \begin{vmatrix} a_1 \\ a_2 \end{vmatrix} \qquad\qquad (17)$$

Utilisons ces définitions pour détailler le système d'équations des vecteurs propres d'état :

$$\overrightarrow{\Psi}_c = \begin{vmatrix} p_{11} & p_{12} \\ p_{21} & p_{22} \end{vmatrix} \cdot \begin{vmatrix} \dot{I}_c \\ \overrightarrow{\Phi}_c \end{vmatrix} = \begin{vmatrix} \overrightarrow{\Psi}_{1c} \\ \overrightarrow{\Psi}_{2c} \end{vmatrix} \qquad\qquad (18)$$

$$\overrightarrow{\Psi}_0 = \begin{vmatrix} p_{11} & p_{12} \\ p_{21} & p_{22} \end{vmatrix} \cdot \begin{vmatrix} \dot{I}_0 \\ \overrightarrow{\Phi}_0 \end{vmatrix} = \begin{vmatrix} \overrightarrow{\Psi}_{10} \\ \overrightarrow{\Psi}_{20} \end{vmatrix} \qquad\qquad (19)$$

$$\overrightarrow{\Psi}_c = \begin{vmatrix} e^{\mu_1 \cdot T} & 0 \\ 0 & e^{\mu_2 \cdot T} \end{vmatrix} \cdot \overrightarrow{\Psi}_0 + \begin{vmatrix} a_1 \\ a_2 \end{vmatrix} \cdot \overline{\overline{V}} \qquad\qquad (20)$$

où :

- $\dot{I}_c$ et $\overrightarrow{\Phi}_c$ sont les vecteurs respectivement de courant et de flux de consigne,

- $\dot{I}_0$ et $\overrightarrow{\Phi}_0$ sont les vecteurs initiaux respectivement de courant et de flux.

Posons :

$$e_1 = e^{\mu_1 \cdot T} \qquad e_2 = e^{\mu_2 \cdot T}$$

Le système d'équation devient :

9

$$\begin{vmatrix} p_{11} & p_{12} \\ p_{21} & p_{22} \end{vmatrix} \cdot \begin{vmatrix} \dot{I}_c \\ \vec{\varPhi}_c \end{vmatrix} = \begin{vmatrix} e_1 \cdot p_{11} & e_1 \cdot p_{12} \\ e_2 \cdot p_{21} & e_2 \cdot p_{22} \end{vmatrix} \cdot \begin{vmatrix} \dot{I}_0 \\ \vec{\varPhi}_0 \end{vmatrix} + \begin{vmatrix} a_1 \\ a_2 \end{vmatrix} \cdot \overline{\overline{V}} \qquad (21)$$

Puis se décompose en deux équations complexes :

$$p_{11} \cdot \dot{I}_c + p_{12} \cdot \vec{\varPhi}_c = e_1 \cdot \left( p_{11} \cdot \dot{I}_0 + p_{12} \cdot \vec{\varPhi}_0 \right) + a_1 \cdot \overline{\overline{V}} \qquad (22)$$

$$p_{21} \cdot \dot{I}_c + p_{22} \cdot \vec{\varPhi}_c = e_2 \cdot \left( p_{21} \cdot \dot{I}_0 + p_{22} \cdot \vec{\varPhi}_0 \right) + a_2 \cdot \overline{\overline{V}} \qquad (23)$$

lesquelles peuvent tout aussi bien s'écrire :

$$\vec{\varPsi}_{1c} = e_1 \cdot \vec{\varPsi}_{10} + a_1 \cdot \overline{\overline{V}} \qquad (24)$$

$$\vec{\varPsi}_{2c} = e_2 \cdot \vec{\varPsi}_{20} + a_2 \cdot \overline{\overline{V}} \qquad (25)$$

On élimine alors le vecteur de commande complexe entre les équations (22) et (23) :

$$\left( a_2 \cdot p_{11} - a_1 \cdot p_{21} \right) \cdot \dot{I}_c + \left( a_2 \cdot p_{12} - a_1 \cdot p_{22} \right) \cdot \vec{\varPhi}_c = $$
$$\left( a_2 \cdot e_1 \cdot p_{11} - a_1 \cdot e_2 \cdot p_{21} \right) \cdot \dot{I}_0 + \left( a_2 \cdot e_1 \cdot p_{12} - a_1 \cdot e_2 \cdot p_{22} \right) \cdot \vec{\varPhi}_0 \qquad (26)$$

Cette relation démontre à l'évidence que le vecteur de courant de consigne est lié au vecteur de flux de consigne et qu'ils dépendent tous deux de l'état initial connu, au second membre de cette équation.

Le coefficient $(a_2 \cdot p_{11} - a_1 \cdot p_{21})$ qui dépend de l'application n'est pas nul puisque le flux de la machine électrique tournante dépend du courant d'alimentation de cette machine. Il est donc possible d'écrire la relation suivante :

$$\dot{I}_c + \frac{a_2 \cdot p_{12} - a_1 \cdot p_{22}}{a_2 \cdot p_{11} - a_1 \cdot p_{21}} \cdot \vec{\varPhi}_c = \frac{\left( a_2 \cdot e_1 \cdot p_{11} - a_1 \cdot e_2 \cdot p_{21} \right) \cdot \dot{I}_0 + \left( a_2 \cdot e_1 \cdot p_{12} - a_1 \cdot e_2 \cdot p_{22} \right) \cdot \vec{\varPhi}_0}{a_2 \cdot p_{11} - a_1 \cdot p_{21}} \qquad (27)$$

On remarquera que si ce coefficient $(a_2 \cdot p_{11} - a_1 \cdot p_{21})$ est nul, la dépendance entre le courant de consigne et le flux de consigne au travers de l'état initial, disparaît totalement, ce qui signifie pratiquement qu'il n'est pas possible de commander le vecteur de flux à partir du vecteur de courant. Le flux est donc soit constant soit commandé par une autre voie, de sorte que le procédé de commande à réponse pile décrit ici ne s'applique pas.

Posons :

$$\overline{E}_0 = \frac{\left( a_2 \cdot e_1 \cdot p_{11} - a_1 \cdot e_2 \cdot p_{21} \right) \cdot \dot{I}_0 + \left( a_2 \cdot e_1 \cdot p_{12} - a_1 \cdot e_2 \cdot p_{22} \right) \cdot \vec{\varPhi}_0}{a_2 \cdot p_{11} - a_1 \cdot p_{21}} = E_0 \cdot e^{i \cdot \varepsilon_0} \qquad (28)$$

On obtient une forme plus concise de la relation (27) :

$$\dot{I}_c + \frac{a_2 \cdot p_{12} - a_1 \cdot p_{22}}{a_2 \cdot p_{11} - a_1 \cdot p_{21}} \cdot \vec{\Phi}_c = E_0 \cdot e^{i \cdot \varepsilon_0} \qquad (29)$$

dans laquelle les vecteurs de courant et de flux sont représentés par une expression complexe dans le repère de consigne.

$$\dot{I}_c = I_{cd} + i \cdot I_{cq} \qquad (30)$$

$$\vec{\Phi}_c = \Phi_{cd} = \left\| \vec{\Phi}_c \right\| \qquad (31)$$

où $I_{cd}$ est le courant de magnétisation et $I_{cq}$ le courant permettant de créer la force mécanique avec le flux magnétique du moteur.
Il est alors possible d'écrire :

$$I_{cd} + i \cdot I_{cq} + \frac{a_2 \cdot p_{12} - a_1 \cdot p_{22}}{a_2 \cdot p_{11} - a_1 \cdot p_{21}} \cdot \Phi_c = E_0 \cdot e^{i \cdot \varepsilon_0} \qquad (32)$$

Soit deux vecteurs complexes : $\vec{M}$ et $\vec{N}$, et $\vec{M}^*$ le conjugué de $\vec{M}$. Il est connu que :

$$\vec{M}^* \cdot \vec{N} = \langle \vec{M}, \vec{N} \rangle + i \cdot \left\| \vec{M} \wedge \vec{N} \right\| \qquad (33)$$

où :

- $\langle \vec{M}, \vec{N} \rangle$ représente le scalaire réel du produit scalaire des vecteurs, et

- $\left\| \vec{M} \wedge \vec{N} \right\|$, représente le module du produit vectoriel qui est un nombre réel également. On peut donc écrire :

$$\text{Re}\left\{ \vec{M}^* \cdot \vec{N} \right\} = \langle \vec{M}, \vec{N} \rangle \qquad (34)$$

$$\text{Im}\left\{ \vec{M}^* \cdot \vec{N} \right\} = \left\| \vec{M} \wedge \vec{N} \right\| \qquad (35)$$

Calculons maintenant le produit scalaire des vecteurs de courant et de flux qui est égale à l'énergie magnétique Q à une constante kq près, et le produit vectoriel de ces mêmes vecteurs qui est égal à une force mécanique $F_m$ à une constante $k_m$ près :

$$\ddot{I}_c \cdot \vec{\Phi}_c = E_0 \cdot e^{-i \cdot \varepsilon_0} \cdot \vec{\Phi}_c - \frac{a_2^* \cdot p_{12}^* - a_1^* \cdot p_{22}^*}{a_2^* \cdot p_{11}^* - a_1^* \cdot p_{21}^*} \cdot \left\| \vec{\Phi}_c \right\|^2 = \frac{Q}{k_q} + i \cdot \frac{F_m}{k_m} \qquad (36)$$

Cette relation complexe se décompose en deux équations réelles :

$$\mathrm{Re}\left\{\overset{\bullet\bullet}{I_c}\cdot\vec{\varPhi}_c\right\}=<\overset{\bullet}{I_c},\vec{\varPhi}_c>=\frac{Q}{k_q}=I_{cd}\cdot\left\|\vec{\varPhi}_c\right\|=E_0\cdot\cos(\varepsilon_0)\cdot\left\|\vec{\varPhi}_c\right\|-\mathrm{Re}\left\{\frac{a_2\cdot p_{12}-a_1\cdot p_{22}}{a_2\cdot p_{11}-a_1\cdot p_{21}}\right\}\cdot\left\|\vec{\varPhi}_c\right\|^2 \quad (37)$$

et du fait du sens du repère choisi :

$$\mathrm{Im}\left\{\overset{\bullet\bullet}{I_c}\cdot\vec{\varPhi}_c\right\}=-\left\|\overset{\bullet}{I_c}\wedge\vec{\varPhi}_c\right\|=-\frac{F_m}{k_m}=I_{cq}\cdot\left\|\vec{\varPhi}_c\right\|=-E_0\cdot\sin(\varepsilon_0)\cdot\left\|\vec{\varPhi}_c\right\|+\mathrm{Im}\left\{\frac{a_2\cdot p_{12}-a_1\cdot p_{22}}{a_2\cdot p_{11}-a_1\cdot p_{21}}\right\}\cdot\left\|\vec{\varPhi}_c\right\|^2 \quad (38)$$

où Re{...} et Im{...} désignent les parties respectivement réelle et imaginaire d'un nombre complexe.

Ces relations (37) et (38) se simplifient :

$$I_{cd}+\mathrm{Re}\left\{\frac{a_2\cdot p_{12}-a_1\cdot p_{22}}{a_2\cdot p_{11}-a_1\cdot p_{21}}\right\}\cdot\left\|\vec{\varPhi}_c\right\|=E_0\cdot\cos(\varepsilon_0) \quad (39)$$

$$I_{cq}+\mathrm{Im}\left\{\frac{a_2\cdot p_{12}-a_1\cdot p_{22}}{a_2\cdot p_{11}-a_1\cdot p_{21}}\right\}\cdot\left\|\vec{\varPhi}_c\right\|=E_0\cdot\sin(\varepsilon_0) \quad (40)$$

De ces deux équations il est alors possible d'extraire $I_{cd}$ en éliminant $\varepsilon_0$, sous deux formes différentes :

Première forme:

On calcule $\varepsilon_0$ à partir de la deuxième équation et on le remplace par son expression dans la première équation :

$$\varepsilon_0=\arcsin\left(\frac{I_{cq}}{E_0}+\mathrm{Im}\left\{\frac{a_2\cdot p_{12}-a_1\cdot p_{22}}{a_2\cdot p_{11}-a_1\cdot p_{21}}\right\}\cdot\frac{\left\|\vec{\varPhi}_c\right\|}{E_0}\right) \quad (41)$$

puis :

$$I_{cd}=-\mathrm{Re}\left\{\frac{a_2\cdot p_{12}-a_1\cdot p_{22}}{a_2\cdot p_{11}-a_1\cdot p_{21}}\right\}\cdot\left\|\vec{\varPhi}_c\right\|+E_0\cdot\cos\left[\arcsin\left(\frac{I_{cq}}{E_0}+\mathrm{Im}\left\{\frac{a_2\cdot p_{12}-a_1\cdot p_{22}}{a_2\cdot p_{11}-a_1\cdot p_{21}}\right\}\cdot\frac{\left\|\vec{\varPhi}_c\right\|}{E_0}\right)\right] \quad (42)$$

Le contexte de l'application permet d'éliminer une des deux déterminations principales de Arcsin ( ), pour conserver celle dont le cosinus est négatif.

Deuxième forme:

On élève au carré les deux membres des deux équations et on les additionne pour remplacer $\cos^2(\varepsilon_0)+\sin^2(\varepsilon_0)=1$ par sa valeur numérique :

$$\left[I_{cd}+\mathrm{Re}\left\{\frac{a_2\cdot p_{12}-a_1\cdot p_{22}}{a_2\cdot p_{11}-a_1\cdot p_{21}}\right\}\cdot\left\|\vec{\varPhi}_c\right\|\right]^2+\left[I_{cq}+\mathrm{Im}\left\{\frac{a_2\cdot p_{12}-a_1\cdot p_{22}}{a_2\cdot p_{11}-a_1\cdot p_{21}}\right\}\cdot\left\|\vec{\varPhi}_c\right\|\right]^2=E_0^2 \quad (43)$$

Le développement de cette nouvelle relation, permet de calculer $I_{cd}$ comme solution d'une équation du second degré :

$$I_{cd} = -\operatorname{Re}\left\{\frac{a_2 \cdot p_{12} - a_1 \cdot p_{22}}{a_2 \cdot p_{11} - a_1 \cdot p_{21}}\right\} \cdot \left\|\vec{\Phi}_c\right\| \pm \sqrt{E_0^2 - \left[I_{cq} + \operatorname{Im}\left\{\frac{a_2 \cdot p_{12} - a_1 \cdot p_{22}}{a_2 \cdot p_{11} - a_1 \cdot p_{21}}\right\} \cdot \left\|\vec{\Phi}_c\right\|\right]^2} \quad (44)$$

L'élévation au carré fait apparaître une racine étrangère qu'il convient d'éliminer par le contexte de l'application, pour ne conserver que celle qui présente le signe négatif devant le radical.

Notons encore que :

$$I_{cq} \cdot \left\|\vec{\Phi}_c\right\| = \frac{F_m}{k_m} \quad (45)$$

Cette dernière relation permet donc de transformer une consigne de force mécanique $F_{mc}$ et une consigne de module de flux magnétique $\left\|\vec{\Phi}_c\right\|$ en une consigne de la projection du vecteur de courant sur l'axe orthogonal à l'axe du vecteur de flux :

$$I_{cq} = \frac{F_{mc}}{k_m \cdot \left\|\vec{\Phi}_c\right\|} \quad (46)$$

L'une ou l'autre des solutions de $I_{cd}$, dépend alors :

- des consignes $F_{mc}, \left\|\vec{\Phi}_c\right\|$,
- des paramètres de l'application : $a_1, a_2, p_{11}, p_{12}, p_{21}, p_{22}$, dépendants des valeurs propres,
- des conditions initiales mesurées : $\vec{I}_0, \vec{\Phi}_0$ par l'intermédiaire de $\vec{E}_0$.

Les deux formes de la relation reliant le courant de magnétisation avec les consignes primaires, paramètres et état initial, permettent donc de calculer la deuxième coordonnée du courant de consigne, projection du vecteur de courant de consigne sur le vecteur de flux magnétique.

$$I_{cd} = -\operatorname{Re}\left\{\frac{a_2 \cdot P_{12} - a_1 \cdot P_{22}}{a_2 \cdot P_{11} - a_1 P_{21}}\right\} \cdot \left\|\vec{\Phi}_c\right\|$$
$$+ E_0 \cdot \cos\left[\arcsin\left(\frac{F_{mc}}{k_m \cdot \left\|\vec{\Phi}_c\right\| E_0} \cdot + \operatorname{Im}\left\{\frac{a_2 \cdot P_{12} - a_1 \cdot P_{22}}{a_2 \cdot P_{11} - a_1 \cdot P_{21}}\right\} \cdot \frac{\left\|\vec{\Phi}_c\right\|}{E_0}\right)\right] \quad (47),$$

ou

$$I_{cd} = \operatorname{Re}\left\{\frac{a_2 \cdot P_{12} - a_1 \cdot P_{22}}{a_2 \cdot P_{11} - a_1 \cdot P_{21}}\right\} \cdot \left\|\vec{\Phi}_c\right\| \pm \sqrt{E_0^2 - \left[\frac{F_{mc}}{k_m \cdot \left\|\vec{\Phi}_c\right\|} + \operatorname{Im}\left\{\frac{a_2 \cdot P_{12} - a_1 \cdot P_{22}}{a_2 \cdot P_{11} - a_1 \cdot P_{21}}\right\} \cdot \left\|\vec{\Phi}_c\right\|\right]^2} \quad (48)$$

En résumé on obtient ($I_{cd}$,$I_{cq}$) et ($\Phi_{cd}$,0) à partir de $\left(F_{mc}, \left\|\vec{\Phi}_c\right\|\right)$ en utilisant les relations précédentes, ce qui permet de constituer le vecteur propre d'état de consigne projeté dans le repère de consigne :

$$\Gamma_c \cdot \overline{\Psi}_c = \begin{vmatrix} P_{11} \cdot \left(I_{cd} + i \cdot I_{cq}\right) + P_{12} \cdot \Phi_{cd} \\ P_{21} \cdot \left(I_{cd} + i \cdot I_{cq}\right) + P_{22} \cdot \Phi_{cd} \end{vmatrix} = \begin{vmatrix} \overrightarrow{\Psi}_{1c}^{dq} \\ \overrightarrow{\Psi}_{2c}^{dq} \end{vmatrix} \qquad (49)$$

de la relation :

$$\Gamma_T \cdot \left[\Gamma_c \cdot \overline{\Psi}_c\right] = e^{D \cdot T} \cdot \left[\Gamma_0 \cdot \overline{\Psi}_0\right] + \left[\Gamma_0 \cdot C\right] \cdot \overline{\overline{V}} \qquad (50)$$

Le vecteur de courant de consigne ainsi établit permet d'obtenir en même temps et simultanément, à l'expiration de l'intervalle T, la consigne de force mécanique $F_{mc}$ et la consigne de flux $\left\|\vec{\Phi}_c\right\|$.

On peut écrire de même :

$$\Gamma_0 \cdot \overline{\Psi}_0 = \begin{vmatrix} P_{11} \cdot \left(I_{0d_0} + i \cdot I_{0q_0}\right) + P_{12} \cdot \Phi_{0d_0} \\ P_{21} \cdot \left(I_{0d_0} + i \cdot I_{0q_0}\right) + P_{22} \cdot \Phi_{0d_0} \end{vmatrix} = \begin{vmatrix} \overrightarrow{\Psi}_{10}^{d_0q_0} \\ \overrightarrow{\Psi}_{20}^{d_0q_0} \end{vmatrix} \qquad (51)$$

état initial connu par la mesure.

I.3 - Exemple d'établissement de la matrice $\Gamma_T$ pour le cas d'un moteur électrique asynchrone

Du fait que le vecteur de la commande est appliqué ici sur un moteur électrique rotatif triphasé dans un repère fixe par rapport au stator nous choisirons un vecteur d'état composé des vecteurs de courant statorique $\vec{I}_s$, et de flux rotorique $\vec{\Phi}_r$ vu du stator, dans le repère orthonormé communément appelé ($\alpha,\beta$), fixe par rapport au stator du moteur après réduction par le nombre de paires de pôles magnétiques du moteur. Le passage du système triphasé au système diphasé dans ce repère orthonormé ($\alpha,\beta$) de référence se fait à l'aide de la transformation de Concordia. L'axe $\alpha$ peut, par exemple, être choisi dans la direction polaire électrique de la phase R.

Le vecteur de courant statorique est mesurable à l'aide de capteurs de courant disposés à l'extérieur du moteur en série avec les phases, ou une partie des phases du moteur. Le vecteur de flux rotorique est connu à partir des tensions et des courants du moteur ou bien il est observable. Ces deux vecteurs permettent d'estimer ou de calculer un état initial. Ils permettent également de traduire, conjointement, une consigne de couple mécanique par leur produit vectoriel et donc par leurs coordonnées, ainsi qu'une consigne d'énergie magnétique si nécessaire.

Le vecteur d'état choisi est donc de dimension 4 dans ce cas. Il y a en effet 4 degrés de liberté électrotechniques. On peut le noter indifféremment à l'aide des deux vecteurs choisis, pour simplifier les notations, ou avec les nombres complexes les représentant dans le repère complexe ($\alpha,\beta$), $\beta$ étant l'axe des imaginaires purs, pour simplifier les calculs des valeurs propres, par réduction du rang des matrices de quatre à deux en complexe.

$$\overline{X} = \begin{vmatrix} \vec{I}_s \\ \vec{\Phi}_r \end{vmatrix} = \begin{vmatrix} I_{s\alpha} + i \cdot I_{s\beta} \\ \Phi_{r\alpha} + i \cdot \Phi_{r\beta} \end{vmatrix} \qquad (52)$$

Le deuxième avantage de ce formalisme utilisant les nombres complexes, est qu'il permet de traduire les rotations des repères de coordonnées par une simple exponentielle scalaire complexe au lieu de l'utilisation d'une matrice carrée de dimension 2 en complexe.

La matrice $\Gamma_T$ est alors telle qu'il est possible de l'écrire en complexe sous la forme :

$$\Gamma_T = e^{i \cdot \Delta\theta_P} \tag{53}$$

$\Delta\theta_P$ représente la rotation angulaire prédite du flux pendant l'intervalle T.

Avec ce choix des variables d'état, on peut préciser les vecteurs propres d'état initial.

$$\Gamma_0 \cdot \vec{\Psi}_0 = \begin{vmatrix} \vec{\Psi}_{10}^{d_0 q_0} \\ \vec{\Psi}_{20}^{d_0 q_0} \end{vmatrix} = \begin{vmatrix} p_{11} \cdot \left( I_{0d_0} + i \cdot I_{0q_0} \right) + p_{12} \cdot \Phi_{0q_0} \\ p_{21} \cdot \left( I_{0d_0} + i \cdot I_{0q_0} \right) + p_{22} \cdot \Phi_{0d_0} \end{vmatrix} \tag{54}$$

Les variables $(I_{0d_0}, I_{0q_0})(\Phi_{0d_0}, 0)$ représentent l'état initial des vecteurs propres d'état projetés dans le repère initial, défini à partir de la transformation $\Gamma_0 = e^{-i \cdot \theta_0}$ par rapport au référentiel de référence fixe $(\alpha, \beta)$. Les valeurs initiales $(I_{0d_0}, I_{0q_0})(\Phi_{0d_0}, 0)$ et $\Gamma_0 = e^{-i \cdot \theta_0}$ sont connues par la mesure des courants et l'observation du flux.

L'équation générale des vecteurs propres d'état projetés dans les repères initial et de consigne devient :

$$e^{i \cdot \Delta\theta_P} \cdot \begin{vmatrix} P_{11} \cdot \left( I_{cd} + i \cdot I_{cq} \right) + P_{12} \cdot \Phi_{cd} \\ P_{21} \cdot \left( I_{cd} + i \cdot I_{cq} \right) + P_{22} \cdot \Phi_{cd} \end{vmatrix} = \begin{vmatrix} e^{\mu_1 \cdot T} & 0 \\ 0 & e^{\mu_2 \cdot T} \end{vmatrix} \cdot \begin{vmatrix} P_{11} \cdot \left( I_{0d_0} + i \cdot I_{0q_0} \right) + P_{12} \cdot \Phi_{0d_0} \\ P_{21} \cdot \left( I_{0d_0} + i \cdot I_{0q_0} \right) + P_{22} \cdot \Phi_{0d_0} \end{vmatrix} + e^{-i \cdot \theta_0} \cdot \begin{vmatrix} a_1 \\ a_2 \end{vmatrix} \cdot \vec{\vec{V}} \tag{55}$$

Ce système peut être détaillé à nouveau sous forme de deux équations complexes :

$$e^{i \cdot \Delta\theta_P} \cdot \left[ p_{11} \cdot \left( I_{cd} + i \cdot I_{cq} \right) + p_{12} \cdot \Phi_{cd} \right] = e^{\mu_1 \cdot T} \cdot \left[ p_{11} \cdot \left( I_{0d_0} + i \cdot I_{0q_0} \right) + p_{12} \cdot \Phi_{0d_0} \right] + e^{-i \cdot \theta_0} \cdot a_1 \cdot \vec{\vec{V}} \tag{56}$$

$$e^{i \cdot \Delta\theta_P} \cdot \left[ p_{21} \cdot \left( I_{cd} + i \cdot I_{cq} \right) + p_{22} \cdot \Phi_{cd} \right] = e^{\mu_2 \cdot T} \cdot \left[ p_{21} \cdot \left( I_{0d_0} + i \cdot I_{0q_0} \right) + p_{22} \cdot \Phi_{0d_0} \right] + e^{-i \cdot \theta_0} \cdot a_2 \cdot \vec{\vec{V}} \tag{57}$$

On élimine à nouveau le vecteur de commande entre ces deux équations complexes :

$$\Gamma_T = e^{i \cdot \Delta\theta_P} = \frac{e^{\mu_1 \cdot T} \cdot a_2 \cdot \left[ p_{11} \cdot \left( I_{0d_0} + i \cdot I_{0q_0} \right) + p_{12} \cdot \Phi_{0d_0} \right] - e^{\mu_2 \cdot T} \cdot a_1 \cdot \left[ p_{21} \cdot \left( I_{0d_0} + i \cdot I_{0q_0} \right) + p_{22} \cdot \Phi_{0d_0} \right]}{a_2 \cdot \left[ p_{11} \cdot \left( I_{cd} + i \cdot I_{cq} \right) + p_{12} \cdot \Phi_{cd} \right] - a_1 \cdot \left[ p_{21} \cdot \left( I_{cd} + i \cdot I_{cq} \right) + p_{22} \cdot \Phi_{cd} \right]} \tag{58}$$

ou encore :

$$\Gamma_T = \frac{e^{\mu_1 \cdot T} \cdot a_2 \cdot \vec{\Psi}_{10}^{d_0 q_0} - e^{\mu_2 \cdot T} \cdot a_1 \cdot \vec{\Psi}_{20}^{d_0 q_0}}{a_2 \cdot \vec{\Psi}_{1c}^{dq} - a_1 \cdot \vec{\Psi}_{2c}^{dq}} \tag{59}$$

Ce qui permet maintenant de calculer la transformation entre le repère initial et le repère de consigne.

En résumé, $\Gamma_T \cdot \left[ \Gamma_c \cdot \vec{\Psi}_c \right]$ est maintenant entièrement défini par les consignes primaires $\left( F_{mc}, \left\| \vec{\Phi}_c \right\| \right)$. Le système :

$$\Gamma_T \cdot \left[\Gamma_c \cdot \bar{\Psi}_c\right] = e^{D \cdot T} \cdot \left[\Gamma_0 \cdot \bar{\Psi}_0\right] + \left[\Gamma_0 \cdot C\right] \cdot \bar{\bar{V}} \qquad (60)$$

est réel d'ordre 4, ou complexe d'ordre 2, et n'a été utilisé que deux fois : une fois pour calculer $I_{cd}$ de manière générale, et une fois pour calculer $\Delta\theta_p$ dans le cas d'un moteur rotatif

I.4 - Calcul du vecteur de commande :

Les inconnues du système d'équations d'état ne sont plus que les deux coordonnées réelles du vecteur de commande, qui sont les solutions d'une des deux équations complexes :

$$e^{i \cdot \Delta\theta_p} \cdot \left[p_{11} \cdot \left(I_{cd} + i \cdot I_{cq}\right) + p_{12} \cdot \Phi_{cd}\right] = e^{\mu_1 \cdot T} \cdot \left[p_{11} \cdot \left(I_{0d_0} + i \cdot I_{0q_0}\right) + p_{12} \cdot \Phi_{0d_0}\right] + e^{-i \cdot \theta_0} \cdot a_1 \cdot \bar{\bar{V}} \qquad (61)$$

$$e^{i \cdot \Delta\theta_p} \cdot \left[p_{21} \cdot \left(I_{cd} + i \cdot I_{cq}\right) + p_{22} \cdot \Phi_{cd}\right] = e^{\mu_2 \cdot T} \cdot \left[p_{21} \cdot \left(I_{0d_0} + i \cdot I_{0q_0}\right) + p_{22} \cdot \Phi_{0d_0}\right] + e^{-i \cdot \theta_0} \cdot a_2 \cdot \bar{\bar{V}} \qquad (62)$$

que l'on peut formaliser simplement en éliminant maintenant $\Gamma_T$ :

$$\bar{V} = e^{i \cdot \theta_0} \cdot \frac{e^{\mu_1 \cdot T} \cdot \left[p_{11} \cdot \left(I_{0d_0} + i \cdot I_{0q_0}\right) + p_{12} \cdot \Phi_{0d_0}\right] \cdot \left[p_{21} \cdot \left(I_{cd} + i \cdot I_{cq}\right) + p_{22} \cdot \Phi_{cd}\right] - e^{\mu_2 \cdot T} \cdot \left[p_{21} \cdot \left(I_{0d_0} + i \cdot I_{0q_0}\right) + p_{22} \cdot \Phi_{0d_0}\right] \cdot \left[p_{11} \cdot \left(I_{cd} + i \cdot I_{cq}\right) + p_{12} \cdot \Phi_{cd}\right]}{a_2 \cdot \left[p_{11} \cdot \left(I_{cd} + i \cdot I_{cq}\right) + p_{12} \cdot \Phi_{cd}\right] - a_1 \cdot \left[p_{21} \cdot \left(I_{cd} + i \cdot I_{cq}\right) + p_{22} \cdot \Phi_{cd}\right]}$$

$$(63)$$

$$\bar{\bar{V}} = e^{i \cdot \theta_0} \cdot \frac{e^{\mu_1 \cdot T} \cdot \vec{\Psi}_{10}^{d_0q_0} \cdot \vec{\Psi}_{2c}^{dq} - e^{\mu_2 \cdot T} \cdot \vec{\Psi}_{20}^{d_0q_0} \cdot \vec{\Psi}_{1c}^{dq}}{a_2 \cdot \vec{\Psi}_{1c}^{dq} - a_1 \cdot \vec{\Psi}_{2c}^{dq}} \qquad (64)$$

C'est une relation complexe, qui fournit les deux dernières inconnues : les coordonnées du vecteur de commande.

On peut maintenant conclure que l'on a inversé le système d'équations d'état de dimension 4, dans le cas d'un moteur rotatif isotrope, et que l'on a trouvé l'expression analytique exacte des quatre inconnues : $I_{cd}, \Delta\theta_p$, et $\left(\bar{V}_\alpha, \bar{V}_\beta\right)$, à partir des consignes primaires : $\left(F_{mc}, \left\|\vec{\Phi}_c\right\|\right)$.

Partie II - Application au moteur rotatif asynchrone :

Le moteur rotatif asynchrone est un moteur rotatif isotrope.

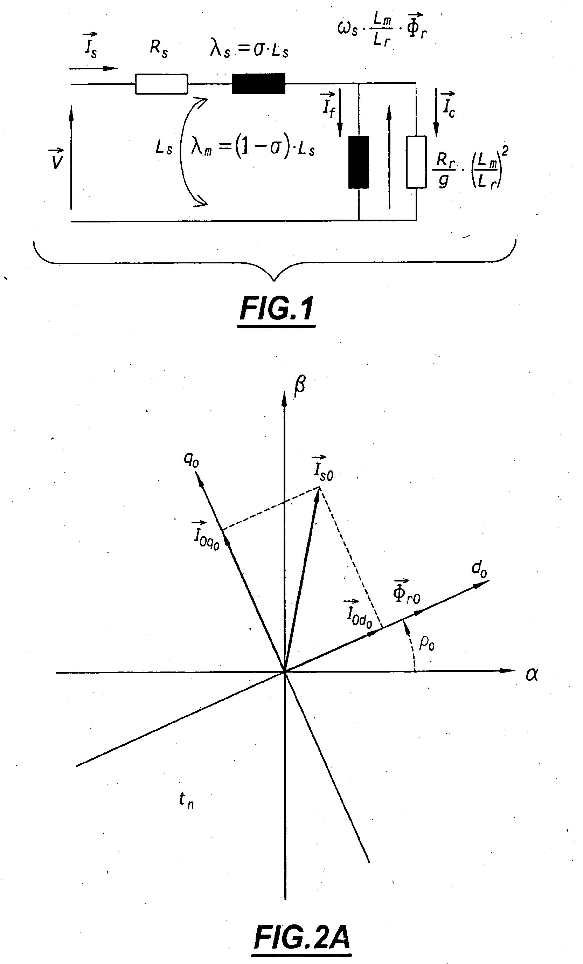

Après la transformation triphasé - diphasé de Concordia, dans le cas du moteur asynchrone on utilisera le schéma équivalent de la figure 1 qui regroupe les inductances de fuite du rotor et celles du stator, au stator du moteur. Ce schéma équivalent a l'avantage de faire apparaître simplement la séparation du courant statorique en ses deux composantes : le courant créant le flux rotorique et le courant créant le couple.

II.I - Représentation d'état du moteur asynchrone :

A l'aide des équations différentielles électrotechniques correspondantes, on démontre facilement que le système linéaire d'équations d'état continues peut être décrit sous la forme :

$$\begin{vmatrix} I_{s\alpha} + i \cdot I_{s\beta} \\ \Phi_{r\alpha} + i \cdot \Phi_{r\beta} \end{vmatrix} = \begin{vmatrix} -\gamma & \beta \cdot (\alpha - i \cdot \omega) \\ \alpha \cdot L_m & -(\alpha - i \cdot \omega) \end{vmatrix} \cdot \begin{vmatrix} I_{s\alpha} + i \cdot I_{s\beta} \\ \Phi_{r\alpha} + i \cdot \Phi_{r\beta} \end{vmatrix} + \begin{vmatrix} \frac{1}{\lambda} \\ 0 \end{vmatrix} \cdot (V_{s\alpha} + i \cdot V_{s\beta}) \tag{65}$$

et donc :

$$A = \begin{vmatrix} -\gamma & \beta \cdot (\alpha - i \cdot \omega) \\ \alpha \cdot L_m & -(\alpha - i \cdot \omega) \end{vmatrix} \quad B = \begin{vmatrix} \frac{1}{\lambda} \\ 0 \end{vmatrix} \tag{66}$$

Avec:

- résistance statorique : $R_s$
- résistance rotorique : $R_f$
- inductance de fuite statorique : $l_s$
- inductance de fuite statorique : $l_r$
- inductance mutuelle : $L_m$
- inductance statorique : $L_s = L_m + l_s$
- inductance rotorique : $L_r = L_m + l_r$

- constante de temps statorique : $\tau_s = \dfrac{L_s}{R_s}$

- constante de temps rotorique : $\tau_r = \dfrac{L_r}{R_r}$

- nombre de paires de pôles: $N_p$

- coefficient de dispersion : $\sigma = 1 - \dfrac{L_m^2}{L_r \cdot L_s}$

Définitions et notations des pulsations mécaniques et électriques:

- pulsations mécanique du rotor: $\Omega$
- pulsations mécanique polaire: $\omega = N_p \cdot \Omega$
- pulsation électrique statorique : $\omega_s$
- pulsation électrique rotorique : $\omega_r$

- glissement : $g = \dfrac{(\omega_s - \omega)}{\omega_s} = \dfrac{\omega_r}{\omega_s}$

et :

$$R_{sr} = R_s + R_r \cdot \dfrac{L_m^2}{L_r^2} \tag{67}$$

$$\alpha = \dfrac{1}{\tau_r} \tag{68}$$

$$\beta = \dfrac{L_m}{\sigma \cdot L_s \cdot L_r} = \dfrac{1 - \sigma}{\sigma} \cdot \dfrac{1}{L_m} \tag{69}$$

17

$$\lambda = \sigma \cdot L_s \tag{70}$$

$$\gamma = \frac{1}{\sigma} \cdot \left[ \frac{1}{\tau_s} + \frac{(1-\sigma)}{\tau_r} \right] = \frac{R_{sr}}{\lambda} \tag{71}$$

II.2 - Expression du système d'équations d'état dans une base de vecteurs propres :

L'équation caractéristique donnant les valeurs propres $\mu_1$, de la matrice A est :

$$\mu^2 + (\alpha + \gamma - i \cdot \omega) \cdot \mu + (\gamma - \alpha \cdot \beta \cdot L_m) \cdot (\alpha - i \cdot \omega) = 0 \tag{72}$$

Notons $\Delta$ le discriminant de l'équation :

$$\Delta = (\alpha - \gamma - i \cdot \omega)^2 + 4 \cdot \alpha \cdot \beta \cdot L_m \cdot (\alpha - i \cdot \omega) \tag{73}$$

Les deux valeurs propres s'expriment donc par :

$$\mu_1 = -\frac{1}{2} \cdot \left( \alpha + \gamma - i \cdot \omega - \sqrt{\Delta} \right) \tag{74}$$

$$\mu_2 = -\frac{1}{2} \cdot \left( \alpha + \gamma - i \cdot \omega + \sqrt{\Delta} \right) \tag{75}$$

On peut noter ici que les valeurs propres dépendent de la pulsation mécanique polaire. Elles doivent donc être calculées à partir du modèle du moteur et de la mesure de vitesse et du nombre de paires de pôles.

$$\omega = N_p \cdot \Omega \tag{76}$$

La matrice A diagonalisée est :

$$D = \begin{vmatrix} \mu_1 & 0 \\ 0 & \mu_2 \end{vmatrix} \tag{77}$$

Les vecteurs propres $\left( \vec{\Pi}_1 = \begin{vmatrix} p_{11} \\ p_{21} \end{vmatrix}, \vec{\Pi}_2 = \begin{vmatrix} p_{12} \\ p_{22} \end{vmatrix} \right)$ correspondant aux valeurs propres, sont l'une des solutions possibles de l'équation :

$$(A - \mu_1 \cdot I) \cdot \vec{\Pi}_i = 0 \tag{78}$$

Pour le premier vecteur propre, défini à une constante multiplicative près :

$$\begin{vmatrix} -\gamma & \beta \cdot (\alpha - i \cdot \omega) \\ \alpha \cdot L_m & -(\alpha - i \cdot \omega) \end{vmatrix} \cdot \begin{vmatrix} p_{11} \\ p_{21} \end{vmatrix} = \mu_1 \cdot \begin{vmatrix} p_{11} \\ p_{21} \end{vmatrix} \tag{79}$$

La deuxième ligne de l'équation matricielle fournit la relation suivante :

$$\alpha \cdot L_m \cdot p_{11} = (\mu_1 + \alpha - i \cdot \omega) \cdot p_{21} \tag{80}$$

ce qui permet de choisir :

$$p_{11} = \frac{2 \cdot (\mu_1 + \alpha - i \cdot \omega)}{2 \cdot \alpha \cdot L_m} = \frac{\alpha - \gamma - i \cdot \omega + \sqrt{\Delta}}{2 \cdot \alpha \cdot L_m} \tag{81}$$

$$p_{21} = 1 \tag{82}$$

De manière similaire pour le deuxième vecteur propre, défini à une constante multiplicative près :

$$p_{12} = \frac{2 \cdot (\mu_2 + \alpha - i \cdot \omega)}{2 \cdot \alpha \cdot L_m} = \frac{\alpha - \gamma - i \cdot \omega - \sqrt{\Delta}}{2 \cdot \alpha \cdot L_m} \tag{83}$$

$$p_{22} = 1 \tag{84}$$

La matrice de passage $P = \begin{vmatrix} \vec{\Pi}_1 & \vec{\Pi}_2 \end{vmatrix} = \begin{vmatrix} p_{11} & p_{12} \\ p_{21} & p_{22} \end{vmatrix}$, telle que : A·P = P· D peut donc s'écrire :

$$P = \begin{vmatrix} \dfrac{\alpha - \gamma - i \cdot \omega + \sqrt{\Delta}}{2 \cdot \alpha \cdot L_m} & \dfrac{\alpha - \gamma - i \cdot \omega - \sqrt{\Delta}}{2 \cdot \alpha \cdot L_m} \\ 1 & 1 \end{vmatrix} \tag{85}$$

ou encore, en utilisant les valeurs propres :

$$P = \frac{1}{\alpha \cdot L_m} \cdot \begin{vmatrix} -(\mu_2 + \gamma) & -(\mu_1 + \gamma) \\ \alpha \cdot L_m & \alpha \cdot L_m \end{vmatrix} \tag{86}$$

et son inverse :

$$P^{-1} = \frac{1}{2\sqrt{\Delta}} \cdot \begin{vmatrix} 2 \cdot \alpha \cdot L_m & -\left(\alpha - \gamma - i \cdot \omega - \sqrt{\Delta}\right) \\ -2 \cdot \alpha \cdot L_m & \left(\alpha - \gamma - i \cdot \omega + \sqrt{\Delta}\right) \end{vmatrix} \qquad (87)$$

ou encore en utilisant les valeurs propres :

$$P^{-1} = \frac{1}{\mu_1 - \mu_2} \cdot \begin{vmatrix} \alpha \cdot L_m & (\mu_1 + \gamma) \\ -\alpha \cdot L_m & -(\mu_2 + \gamma) \end{vmatrix} \qquad (88)$$

il est donc maintenant possible d'écrire :

$$A = P \cdot D \cdot P^{-1} \qquad (89)$$

Avec les notations utilisant les valeurs propres, A devient :

$$A = \begin{vmatrix} -\gamma & -\dfrac{(\mu_1 + \gamma) \cdot (\mu_2 + \gamma)}{\alpha \cdot L_m} \\ \alpha \cdot L_m & (\mu_1 + \mu_2 + \gamma) \end{vmatrix} \qquad (90)$$

Ou encore en utilisant la relation suivante issue de la combinaison des variables intermédiaires :

$$(\mu_1 + \gamma) \cdot (\mu_2 + \gamma) = \alpha \cdot \beta \cdot L_m \cdot (\mu_1 + \mu_2 + \gamma) \qquad (91)$$

$$A = \begin{vmatrix} -\gamma & -\dfrac{(\mu_1 + \gamma) \cdot (\mu_2 + \gamma)}{\alpha \cdot L_m} \\ \alpha \cdot L_m & \dfrac{(\mu_1 + \gamma) \cdot (\mu_2 + \gamma)}{\alpha \cdot L_m \cdot \beta} \end{vmatrix} \qquad (92)$$

En utilisant les variables réduites suivantes :

$$\xi_0 = \frac{\mu_1 - \mu_2}{\alpha \cdot L_m} \quad \xi_1 = \frac{\mu_1 + \gamma}{\alpha \cdot L_m} \quad \xi_2 = \frac{\mu_2 + \gamma}{\alpha \cdot L_m} \qquad (93)$$

En résumé:

$$A = \alpha \cdot L_m \cdot \begin{vmatrix} -\xi & -\xi_1 \cdot \xi_2 \\ 1 & \dfrac{\xi_1 \cdot \xi_2}{\beta} \end{vmatrix} \quad D = \begin{vmatrix} \mu_1 & 0 \\ 0 & \mu_2 \end{vmatrix} \qquad (94)$$

$$P = \begin{vmatrix} -\xi_2 & -\xi_1 \\ 1 & 1 \end{vmatrix} \quad P^{-1} = \frac{1}{\xi_0} \cdot \begin{vmatrix} 1 & \xi_1 \\ -1 & -\xi_2 \end{vmatrix} \tag{95}$$

En remplaçant $F = e^{A \cdot T}$ par $F = P \cdot e^{D \cdot T} \cdot P^{-1}$, on peut maintenant écrire :

$$\left[P^{-1} \cdot \vec{X}_c\right] = e^{D \cdot T} \cdot \left[P^{-1} \cdot \vec{X}_0\right] + D^{-1} \cdot \left(e^{D \cdot T} - I\right) \cdot \left[P^{-1} \cdot B\right] \cdot \overline{\overline{V}} \tag{96}$$

avec :

$$e^{D \cdot T} = \begin{vmatrix} e^{\mu_1 \cdot T} & 0 \\ 0 & e^{\mu_2 \cdot T} \end{vmatrix} \quad D^{-1} = \begin{vmatrix} \dfrac{1}{\mu_1} & 0 \\ 0 & \dfrac{1}{\mu_2} \end{vmatrix} \quad P^{-1} \cdot B = \frac{1}{\lambda \cdot \xi_0} \cdot \begin{vmatrix} 1 \\ -1 \end{vmatrix} \tag{97}$$

on obtient une forme particulièrement simple :

$$\begin{vmatrix} 1 & \xi_1 \\ 1 & \xi_2 \end{vmatrix} \cdot \vec{X}_c = \begin{vmatrix} e^{\mu_1 \cdot T} & 0 \\ 0 & e^{\mu_2 \cdot T} \end{vmatrix} \cdot \begin{vmatrix} 1 & \xi_1 \\ 1 & \xi_2 \end{vmatrix} \cdot \vec{X}_0 + \frac{\overline{\overline{V}}}{\lambda} \cdot \begin{vmatrix} \dfrac{e^{\mu_1 \cdot T} - 1}{\mu_1} \\ \dfrac{e^{\mu_2 \cdot T} - 1}{\mu_2} \end{vmatrix} \tag{98}$$

On reconnaît le formalisme général du procédé :

$$\overrightarrow{\Psi}_c = e^{D \cdot T} \cdot \overrightarrow{\Psi}_0 + C \cdot \overline{\overline{V}} \tag{99}$$

avec :

$$\vec{\Psi}_c = \begin{vmatrix} 1 & \xi_1 \\ 1 & \xi_2 \end{vmatrix} \cdot \vec{X}_c = \begin{vmatrix} \vec{\Psi}_{1c} \\ \vec{\Psi}_{2c} \end{vmatrix} \quad \vec{\Psi}_0 = \begin{vmatrix} 1 & \xi_1 \\ 1 & \xi_2 \end{vmatrix} \cdot \vec{X}_0 = \begin{vmatrix} \vec{\Psi}_{10} \\ \vec{\Psi}_{20} \end{vmatrix} \tag{100}$$

$$e^{D \cdot T} = \begin{vmatrix} e^{\mu_1 \cdot T} & 0 \\ 0 & e^{\mu_2 \cdot T} \end{vmatrix} \quad C = \frac{1}{\lambda} \cdot \begin{vmatrix} \dfrac{e^{\mu_1 \cdot T} - 1}{\mu_1} \\ \dfrac{e^{\mu_2 \cdot T} - 1}{\mu_2} \end{vmatrix} \tag{101}$$

On peut faire apparaître très simplement les coordonnées des vecteurs « propres » d'état en remplaçant les vecteurs d'état par leurs coordonnées vectorielles :

$$\left| \begin{matrix} \vec{I}_{sc} + \xi_1 \cdot \vec{\Phi}_{rc} \\ \vec{I}_{sc} + \xi_2 \cdot \vec{\Phi}_{rc} \end{matrix} \right| = \left| \begin{matrix} e^{\mu_1 \cdot T} \cdot \left( \vec{I}_{s0} + \xi_1 \cdot \vec{\Phi}_{r0} \right) \\ e^{\mu_2 \cdot T} \cdot \left( \vec{I}_{s0} + \xi_2 \cdot \vec{\Phi}_{r0} \right) \end{matrix} \right| + \frac{\vec{\vec{V}}}{\lambda} \cdot \left| \begin{matrix} \dfrac{e^{\mu_1 \cdot T} - 1}{\mu_1} \\ \dfrac{e^{\mu_2 \cdot T} - 1}{\mu_2} \end{matrix} \right| \qquad (102)$$

Les coordonnées des vecteurs « propres » d'état, initial et de consigne sont maintenant :

$$\vec{\Psi}_{10} = \vec{I}_{s0} + \xi_1 \cdot \vec{\Phi}_{r0} \qquad \vec{\Psi}_{20} = \vec{I}_{s0} + \xi_2 \cdot \vec{\Phi}_{r0} \qquad (103)$$

$$\vec{\Psi}_{1c} = \vec{I}_{sc} + \xi_1 \cdot \vec{\Phi}_{rc} \qquad \vec{\Psi}_{2c} = \vec{I}_{sc} + \xi_2 \cdot \vec{\Phi}_{rc} \qquad (104)$$

ce qui conduit aux relations suivantes en posant :

$$a_1 = \frac{e^{\mu_1 \cdot T} - 1}{\lambda \cdot \mu_1} \qquad a_2 = \frac{e^{\mu_2 \cdot T} - 1}{\lambda \cdot \mu_2} \qquad (105)$$

$$\vec{\Psi}_{1c} = e^{\mu_1 \cdot T} \cdot \vec{\Psi}_{10} + a_1 \cdot \vec{\vec{V}} \qquad (106)$$

$$\vec{\Psi}_{2c} = e^{\mu_2 \cdot T} \cdot \vec{\Psi}_{20} + a_2 \cdot \vec{\vec{V}} \qquad (107)$$

Lorsque l'on connaît les paramètres du moteur, il est facile de calculer les différents paramètres réduits intervenant dans l'équation pour une vitesse mécanique $\omega$ donnée et pour un horizon donné de prédiction T. Les coordonnées du vecteur propre d'état initial $\left( \vec{\Psi}_{10}, \vec{\Psi}_{20} \right)$ sont également connues dans le repère $(\alpha, \beta)$ par la mesure des courants $\vec{I}_{s0}$ et la mesure du flux $\vec{\Phi}_{r0}$ ou son estimation par un observateur. Il reste donc à se fixer les vecteurs propres d'état de consigne à l'horizon de prédiction $T$, pour pouvoir calculer l'inconnue : le vecteur de commande $\vec{\vec{V}}$ dans le repère $(\alpha, \beta)$.

II.3 Etablissement du courant de consigne

Pour fixer les consignes de flux rotorique et de couple électromagnétique propres au moteur asynchrone, il faut maintenant respectivement fixer le produit scalaire des vecteurs de courant et de flux, qui fournit l'énergie magnétique, et leur produit vectoriel qui fournit le couple par la loi de Laplace.

On remarque ici, immédiatement que les vecteurs courant et flux auxquels il est fait mention ici sont considérés *au même instant,* à l'expiration de l'intervalle T. De plus on se prépare à calculer le vecteur de commande à appliquer pour que ces consignes soient *obtenues simultanément à* l'expiration de l'intervalle *T* en tenant compte des constantes de temps électrotechniques par l'intermédiaire du modèle. Le calcul est donc un calcul exact qui ne nécessitera ni asservissements, ni découplages entre les deux axes.

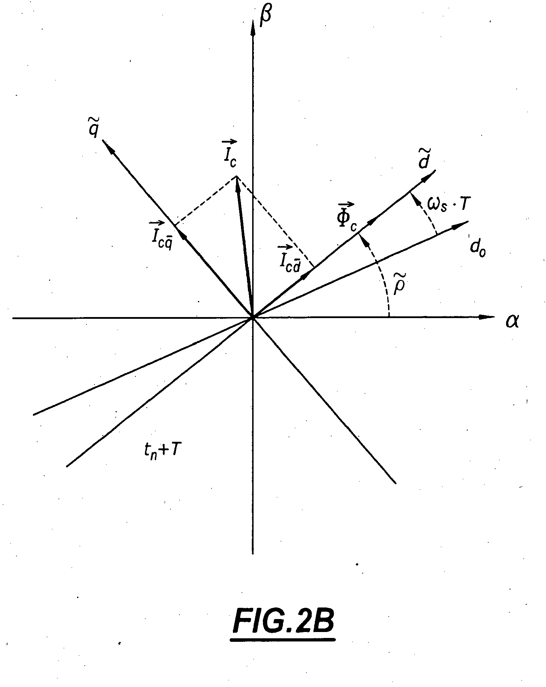

Pour ce calcul un repère initial noté $(d_0, q_0)$ et un repère de consigne noté $(\tilde{d}, \tilde{q})$ sont définis comme indiqué respectivement dans les figures 2A et 2B. Plus précisément, le repère $(d_0, q_0)$ est un repère orthonormé dont l'axe des abscisses est aligné sur le vecteur $\overrightarrow{\Phi}_{r0}$ de flux magnétique initial et le repère $(\tilde{d},\tilde{q})$ est un repère orthonormé dont l'axe des abscisses est aligné sur le vecteur $\overrightarrow{\Phi}_{c}$ de flux magnétique de consigne.

Du fait que les deux vecteurs de consigne sont positionnés à l'horizon $T$, c'est-à-dire à l'expiration de l'intervalle $T$, le repère $(\tilde{d},\tilde{q})$ est un repère prédit à l'expiration de l'intervalle $T$, d'où la nouvelle notation. Sa position est une position instantanée.

L'argument $\rho_0$ du vecteur flux rotorique à l'instant initial est connu, puisque le flux est connu à cet instant. L'argument $\tilde{p}$ du vecteur flux rotorique à l'horizon $T$ est inconnu. On connaît cependant l'intervalle $T$ pendant lequel se fait la rotation du vecteur de flux puisqu'il est choisi par d'autres considérations. Prenons comme nouvelle inconnue la *vitesse angulaire instantanée $\omega_s$ du vecteur de flux* pendant cet intervalle. On en déduit :

$$\tilde{\rho} = \omega_s \cdot T + \rho_0 \qquad\qquad (108)$$

Multiplions les deux membres des relations entre les vecteurs propres d'état par :

$$\Gamma_T \cdot \Gamma_c = \Gamma_0 \qquad\qquad , \qquad\qquad (109)$$

en choisissant dans ce cas, à partir de la relation (108) :

$$e^{i\cdot\omega_s\cdot T} \cdot e^{-i\cdot\tilde{\rho}} = e^{-i\cdot\rho_0} \qquad\qquad (110)$$

ce qui équivaut à une rotation inverse ou à un changement d'axes de coordonnées du repère $(\alpha,\beta)$, vers le repère de consigne $(\tilde{d},\tilde{q})$ pour les consignes et vers le repère initial $(d_0, q_0)$ pour l'état initial.

$$e^{i\cdot\omega_s\cdot T} \cdot \left[\overrightarrow{\Psi}_{1c} \cdot e^{-i\cdot\tilde{\rho}}\right] = e^{\mu_1\cdot T} \cdot \left[\overrightarrow{\Psi}_{10} \cdot e^{-i\cdot\tilde{\rho}_0}\right] + a_1 \cdot e^{-i\cdot\tilde{\rho}_0} \cdot \overline{\overline{V}} \qquad\qquad (111)$$

$$e^{i\cdot\omega_s\cdot T} \cdot \left[\overrightarrow{\Psi}_{2c} \cdot e^{-i\cdot\tilde{\rho}}\right] = e^{\mu_2\cdot T} \cdot \left[\overrightarrow{\Psi}_{20} \cdot e^{-i\cdot\tilde{\rho}_0}\right] + a_2 \cdot e^{-i\cdot\tilde{\rho}_0} \cdot \overline{\overline{V}} \qquad\qquad (112)$$

avec :

$$\overrightarrow{\Psi}_{jc} \cdot e^{-i\cdot\tilde{\rho}} = I_{c\tilde{d}} + i \cdot I_{c\tilde{q}} + \xi_j \cdot \Phi_{c\tilde{d}} \quad j\in\{1;2\} \qquad\qquad (113)$$

$$\overrightarrow{\Psi}_{j0} \cdot e^{-i\cdot\rho_0} = I_{0d_0} + i \cdot I_{0q_0} + \xi_j \cdot \Phi_{0d_0} \qquad\qquad (114)$$

Le vecteur de consigne est maintenant facile à calculer, en fonction du couple désiré et en fonction du module du flux nécessaire, les deux consignes primaires et le vecteur d'état d'origine est connu.

La relation suivante découle des relations (111) à (114) en éliminant le vecteur de commande $\overline{\overline{V}}$ :

$$e^{i \cdot \omega s \cdot T} \cdot \left[ \left( I_{c\tilde{d}} + i \cdot I_{c\tilde{q}} \right) + \Phi_{c\tilde{d}} \cdot \frac{\xi_1 \cdot a_2 - \xi_2 \cdot a_1}{a_2 - a_1} \right] = \frac{e^{\mu_1 \cdot T} \cdot \left[ \bar{\Psi}_{10} \cdot e^{-i \cdot \rho_0} \right] \cdot a_2 - e^{\mu_2 \cdot T} \cdot \left[ \bar{\Psi}_{20} \cdot e^{-i \cdot \rho_0} \right] \cdot a_1}{a_2 - a_1}$$

$$(115)$$

Le second membre est entièrement connu, définissons le module et l'argument de la manière suivante :

$$\eta_0 \cdot e^{i \cdot \varsigma} = \frac{e^{\mu_1 \cdot T} \cdot \left[ \bar{\Psi}_{10} \cdot e^{-i \cdot \rho_0} \right] \cdot a_2 - e^{\mu_2 \cdot T} \cdot \left[ \bar{\Psi}_{20} \cdot e^{-i \cdot \rho_0} \right] \cdot a_1}{a_2 - a_1} = E_0 \cdot e^{i \cdot \varepsilon_0} \cdot e^{-i \cdot \rho_0} \qquad (116)$$

$$E_0 \cdot e^{i \cdot \varepsilon_0} = \frac{e^{\mu_1 \cdot T} \cdot \left[ \bar{\Psi}_{10} \right] \cdot a_2 - e^{\mu_2 \cdot T} \cdot \left[ \bar{\Psi}_{20} \right] \cdot a_1}{a_2 - a_1} \qquad (117)$$

ce qui permet de simplifier l'expression précédente :

$$\left( I_{c\tilde{d}} + i \cdot I_{c\tilde{q}} \right) + \Phi_{c\tilde{d}} \cdot \frac{\xi_1 \cdot a_2 - \xi_2 \cdot a_1}{a_2 - a_1} = \eta_0 \cdot e^{i \cdot (\varsigma - \omega s \cdot T)} \qquad (118)$$

Cette expression se résout en prenant la partie réelle et la partie imaginaire :

$$I_{c\tilde{d}} = -\Phi_{c\tilde{d}} \cdot \text{Re} \left\{ \frac{\xi_1 \cdot a_2 - \xi_2 \cdot a_1}{a_2 - a_1} \right\} + \eta_0 \cdot \cos(\varsigma - \omega s \cdot T) \qquad (119)$$

$$I_{c\tilde{q}} = -\Phi_{c\tilde{d}} \cdot \text{Im} \left\{ \frac{\xi_1 \cdot a_2 - \xi_2 \cdot a_1}{a_2 - a_1} \right\} + \eta_0 \cdot \sin(\varsigma - \omega s \cdot T) \qquad (120)$$

et en éliminant $\omega_s$ :

$$I_{c\tilde{d}} = -\Phi_{c\tilde{d}} \cdot \text{Re} \left\{ \frac{\xi_1 \cdot a_2 - \xi_2 \cdot a_1}{a_2 - a_1} \right\} + \eta_0 \cdot \cos \left( arc \sin \left[ \frac{I_{c\tilde{q}}}{\eta_0} + \frac{\Phi_{c\tilde{d}}}{\eta_0} \cdot \text{Im} \left\{ \frac{\xi_1 \cdot a_2 - \xi_2 \cdot a_1}{a_2 - a_1} \right\} \right] \right) \quad (121)$$

C'est la relation cherchée en régime transitoire et permanent pour relier le courant d'excitation transitoire de consigne, au flux de consigne, et au couple de consigne.

Une autre forme peut être obtenue pour cette relation en élevant au carré et en sommant les parties réelles et imaginaires, ce qui permet d'éliminer l'angle:

$$\left( I_{c\tilde{d}} + \Phi_{rc} \cdot \text{Re} \left\{ \frac{\xi_1 \cdot a_2 - \xi_2 \cdot a_1}{a_2 - a_1} \right\} \right)^2 + \left( I_{c\tilde{q}} + \Phi_{rc} \cdot \text{Im} \left\{ \frac{\xi_1 \cdot a_2 - \xi_2 \cdot a_1}{a_2 - a_1} \right\} \right)^2 - \eta_0^2 = 0 \quad (122)$$

équation qui se résout très simplement :

$$I_{c\tilde{d}} = -\text{Re}\left\{\frac{\xi_1 \cdot a_2 - \xi_2 \cdot a_1}{a_2 - a_1}\right\} \cdot \Phi_{rc} - \sqrt{\eta_0^2 - \left(I_{c\tilde{q}} + \text{Im}\left\{\frac{\xi_1 \cdot a_2 - \xi_2 \cdot a_1}{a_2 - a_1}\right\} \cdot \Phi_{rc}\right)^2} \quad (123)$$

On reconnaît les deux formes de la solution, qui ont été établies de manière générale, dans ce cas particulier.

La consigne de courant $I_{c\tilde{q}}$ d'un moteur asynchrone est donnée par la relation suivante, fonction du couple de consigne et du module du flux de consigne :

$$I_{c\tilde{q}} = \frac{C_c}{N_p \cdot \frac{L_m}{L_r} \cdot \left\|\vec{\Phi}_r\right\|} \quad \text{avec} \quad \left\|\vec{\Phi}_r\right\| = \Phi_{rc} \quad (124)$$

Il ne reste plus qu'à calculer les deux inconnues $\overline{V}$ et $\omega_s$.

II.4 Etablissement de la matrice $\Gamma_T$

La matrice $\Gamma_T$ est donnée par la relation suivante :

$$\Gamma_T = e^{i \cdot \omega_s \cdot T} = \frac{e^{\mu_1 \cdot T} \cdot \left[\overline{\Psi}_{10} \cdot e^{-i \cdot \rho_0}\right] \cdot a_2 - e^{\mu_2 \cdot T} \cdot \left[\overline{\Psi}_{20} \cdot e^{-i \cdot \rho_0}\right] \cdot a_1}{\left[\overline{\Psi}_{1c} \cdot e^{-i \cdot \tilde{\rho}}\right] \cdot a_2 - \left[\overline{\Psi}_{2c} \cdot e^{-i \cdot \tilde{\rho}}\right] \cdot a_1} \quad (125)$$

II.5 Calcul du vecteur de commande :

Le vecteur de commande est donné par la relation suivante :

$$\overline{V} = e^{i \cdot \rho_0} \cdot \frac{e^{\mu_1 \cdot T} \cdot \left[\overline{\Psi}_{10} \cdot e^{-i \cdot \rho_0}\right] \cdot \left[\overline{\Psi}_{2c} \cdot e^{-i \cdot \tilde{\rho}}\right] - e^{\mu_2 \cdot T} \cdot \left[\overline{\Psi}_{20} \cdot e^{-i \cdot \rho_0}\right] \cdot \left[\overline{\Psi}_{1c} \cdot e^{-i \cdot \tilde{\rho}}\right]}{\left[\overline{\Psi}_{1c} \cdot e^{-i \cdot \tilde{\rho}}\right] \cdot a_2 - \left[\overline{\Psi}_{2c} \cdot e^{-i \cdot \tilde{\rho}}\right] \cdot a_1} \quad (126)$$

On reconnaît la solution générale du vecteur de commande correspondant aux moteurs.

On peut encore écrire les vecteurs initiaux dans le repère $(\alpha,\beta)$, où ils sont mesurés, en laissant les vecteurs de consigne dans le repère de consigne où ils sont calculés.

$$\overline{V} = \frac{e^{\mu_1 \cdot T} \cdot \overline{\Psi}_{10} \cdot \left[\overline{\Psi}_{2c} \cdot e^{-i \cdot \tilde{\rho}}\right] - e^{\mu_2 \cdot T} \cdot \overline{\Psi}_{20} \cdot \left[\overline{\Psi}_{1c} \cdot e^{-i \cdot \tilde{\rho}}\right]}{\left[\overline{\Psi}_{1c} \cdot e^{-i \cdot \tilde{\rho}}\right] \cdot a_2 - \left[\overline{\Psi}_{2c} \cdot e^{-i \cdot \tilde{\rho}}\right] \cdot a_1} \quad (127)$$

Partie III : Exemple concret de réalisation :

La figure 3 représente un système 10 de commande à réponse pile d'une machine électrique tournante 12. Ici, la machine 12 est à moteur électrique rotatif asynchrone triphasé équipé d'un stator et d'un rotor.

Le système 10 comprend un onduleur de tension 14 commandable par modulation de largeurs d'impulsions propre à générer un courant et une tension d'alimentation de chacune des phases du moteur 12. Plus précisément, cet onduleur 14 transforme la tension continue d'une source 16 de tension continue en une tension triphasée d'alimentation du moteur 12 sous la commande d'une unité 18 de commande.

L'unité 18 est propre à recevoir la consigne $\Phi_c$, le flux magnétique rotorique, la consigne de couple $C_c$ et la valeur de l'intervalle T. L'unité 18 est également apte à recevoir les mesures réalisées par, au plus, trois capteurs de courant 20 à 22 et par, au plus, trois capteurs de tension 24 à 26. Chacun des capteurs de 20 à 22 est apte à mesurer l'intensité du courant statorique dans une phase du moteur 12. Chacun des capteurs 24 à 26 est apte à mesurer la tension statorique dans une phase respective du moteur 12.

L'unité 18 est également destinée à recevoir les mesures réalisées par un capteur 28 de la vitesse angulaire du rotor du moteur 12. Toutefois, la mesure de la vitesse mécanique du rotor peut être remplacée par un estimateur de cette vitesse de type KALMAN étendu par exemple.

A partir de ces mesures, de la valeur de l'intervalle T et des consignes $\Phi_c$ et $C_c$, l'unité 18 est capable de calculer le vecteur de commande à appliquer à l'onduleur 14 pour que le moteur 12 atteigne, à l'expiration de l'intervalle T, à la fois la consigne de couple $C_c$ et la consigne de flux $\Phi_c$.

Dans le cas d'un onduleur de tension, le vecteur de commande est un vecteur de tension dont les coordonnées sont définies dans un repère fixe de l'onduleur.

Pour calculer ce vecteur de commande, l'unité 18 comprend notamment un module 30 d'établissement du courant de consigne permettant d'atteindre à la fin de l'intervalle T les consignes $C_c$ et $\Phi_c$ et un module 32 de calcul du vecteur de commande à appliquer en continu pendant l'intervalle T pour obtenir à l'expiration de cet intervalle T un courant égal au courant de consigne établi par le module 30.

L'unité 18 comprend aussi un observateur 33 propre à estimer le flux rotorique du moteur 12 à partir des mesures de courant et/ou de tension.

Typiquement, l'unité 18 est réalisée à partir d'un calculateur programmable conventionnel apte à exécuter des instructions enregistrées sur un support 34 d'enregistrement d'informations. A cet effet, le support 34 comporte des instructions pour l'exécution du procédé de la figure 4 lorsque ces instructions sont exécutées par l'unité 18.

Le fonctionnement du système 10 va maintenant être décrit en regard du procédé de la figure 4.

Lors de la conception du procédé de commande à réponse pile du moteur 12, lors d'une étape 40, le système linéaire d'équations d'état continues du moteur 12 commandé par l'onduleur 14 est déterminé à partir des équations différentielles électrotechniques du moteur 12 raccordé à de l'onduleur 14. Lors de cette étape, les constantes $\sigma$, $\tau_r$, $\alpha$, $\beta$, $\lambda$ et $\gamma$ sont calculées et enregistrées par exemple dans le support 34.

Lors de l'exécution du procédé de commande, et avant l'application en continu pendant l'intervalle de temps T du vecteur de commande calculé, la valeur des consignes $C_c$, $\Phi_c$ et de l'intervalle T sont choisies lors d'une étape 42.

Ensuite, lors d'une étape 44, le capteur 28 mesure la pulsation mécanique $\Omega$ du rotor.

Les paramètres du moteur dont la valeur est fonction de la pulsation mécanique $\Omega$ sont ensuite calculés lors d'une étape 46. Plus précisément, lors de cette étape 46, la pulsation mécanique polaires $\omega$, le discriminant $\Delta$ (défini par la relation 73), les valeurs propres $\mu_1$ et $\mu_2$ (données respectivement par les relations 74 et 75), les coefficients $\xi_1$ et $\xi_2$ (données par la relation 93) et les coefficients $a_1$ et $a_2$ (données par la relation 105 et qui dépendent, de plus, de T) sont calculés.

Ensuite, lors d'une étape 50, l'intensité initiale du courant statorique est mesurée et, lors d'une étape 52 une estimation du flux rotorique initial est réalisé par l'observateur 33.

A partir de l'estimation établie lors de l'étape 52, du vecteur initial de flux magnétique $\overrightarrow{\Phi_{r0}}$, l'argument $\rho_0$ est calculé lors d'une étape 54.

Ensuite, les vecteurs propres initiaux $\overrightarrow{\Psi}_{10}$ et $\overrightarrow{\Psi}_{20}$ sont calculés lors d'une étape 56. Plus précisément, lors de l'étape 56, les coefficients $\overrightarrow{\Psi}_{10} \cdot e^{-i \cdot \rho_0}$ et $\overrightarrow{\Psi}_{20} \cdot e^{-i \cdot \rho_0}$ sont calculés à l'aide des relations suivantes :

$$\bar{\Psi}_{10} \cdot e^{-i \cdot \rho_0} = \bar{I}_{s0} \cdot e^{-i \cdot \rho_0} + \xi_1 \cdot \left\| \bar{\Phi}_{r0} \right\| \tag{128}$$

$$\bar{\Psi}_{20} \cdot e^{-i \cdot \rho_0} = \bar{I}_{s0} \cdot e^{-i \cdot \rho_0} + \xi_2 \cdot \left\| \bar{\Phi}_{r0} \right\| \tag{129}$$

En parallèle aux étapes 50 à 56, la consigne de courant est établie, lors d'une étape 60 à l'aide des relations (123) et (124).

Les vecteurs propres $\vec{\Psi}_{1c}$ et $\vec{\Psi}_{2c}$ sont alors établis lors d'une étape 62. Plus précisément, lors de l'étape 62, les facteurs $\vec{\Psi}'_{1c} \cdot e^{-i\cdot\tilde{p}}$ et $\vec{\Psi}_{2c} \cdot e^{-i\cdot\tilde{p}}$ sont calculés à l'aide des relations suivantes :

$$\vec{\Psi}_{1c} \cdot e^{-i\cdot\tilde{p}} = I_{dc} + i \cdot I_{qc} + \xi_1 \cdot \left\| \vec{\Phi}_{rc} \right\| \qquad (130)$$

$$\vec{\Psi}_{2c} \cdot e^{-i\cdot\tilde{p}} = I_{dc} + i \cdot I_{qc} + \xi_2 \cdot \left\| \vec{\Phi}_{rc} \right\| \qquad (140)$$

Une fois les vecteurs propres de consigne et initial établis, lors d'une étape 64, le vecteur de commande est calculé à l'aide de la relation 127.

Ce vecteur moyen de commande calculé est alors appliqué continûment, par modulation de largeur d'impulsions (Pulse Width Modulation en anglais), lors d'une étape 66, par l'onduleur 14 dans l'intervalle T.

Ensuite, les étapes 42 à 66 sont réitérées pour un nouvel intervalle T.

De nombreux autres modes de réalisation de ce système et de ce procédé de commande sont possibles. Par exemple, le vecteur initial de flux magnétique est, en variante, mesuré et non pas estimé par l'intermédiaire d'un observateur.

Ici, le procédé et le système ont été décrits dans le cas particulier où la solution analytique exacte permettant à la fois d'obtenir le vecteur de consigne de courant et le vecteur de commande sont implémentés. En variante, et en fonction de l'application spécifique envisagée des termes négligeables de ces solutions analytiques exactes peuvent être omis. Par exemple, la racine carrée de la relation (123) peut être assimilée à $|\eta_0|$ si T est petit devant les constantes de temps électrotechniques du moteur.

Le système 10 a été décrit dans le cas particulier où le moteur est commandé à partir d'un onduleur commandable. Toutefois, ce qui a été décrit s'applique également au cas de moteurs commandés par des hacheurs commandables, des amplificateurs ou des redresseurs commandables, permettant d'obtenir la tension de commande calculée.

Enfin, comme indiqué en introduction, si le système d'équations d'état décrivant le fonctionnement du moteur n'est pas linéaire, il est possible de linéariser ce système autour de plusieurs points de fonctionnement et pour chaque système linéarisé, d'appliquer le procédé et le système décrits ci-dessus.

**Revendications**

**1.** Procédé de commande à réponse pile d'une machine électrique tournante asynchrone équipée d'un stator et d'un rotor dans laquelle le flux magnétique de la machine dépend du courant d'alimentation de cette machine, ce procédé consistant à appliquer continûment ou en valeur moyenne pendant un intervalle de temps T un vecteur moyen de commande permettant d'obtenir une force mécanique développée par la machine égale à une consigne prédéterminée de force mécanique à l'expiration de cet intervalle T, **caractérisé en ce que**

- le vecteur d'état du système linéaire d'équations d'état modélisant le fonctionnement de la machine est formé d'un vecteur de courant statorique et d'un vecteur de flux magnétique rotorique, et

**en ce que** le procédé comporte :

a) une étape (60) d'établissement d'un courant de consigne statorique permettant d'atteindre, à la fin de l'intervalle T à la fois la consigne de force mécanique et un flux magnétique de consigne rotorique, ce courant de consigne statorique étant établi à partir d'une relation reliant le courant de consigne statorique, le flux magnétique de consigne rotorique et les valeurs initiales du courant statorique et du flux magnétique rotorique au début de l'intervalle T, et

b) une étape (64) de calcul du vecteur moyen de commande à appliquer continûment pendant l'intervalle T pour obtenir à l'expiration de cet intervalle T un courant statorique égal au courant de consigne statorique établi lors de l'étape a).

# EP 1 727 272 B1

**2.** Procédé selon la revendication 1, **caractérisé en ce que** le courant de consigne statorique est une solution de la relation complexe suivante :

$$
(a_2 \cdot p_{11} - a_1 \cdot p_{21}) \cdot \vec{I}_c + (a_2 \cdot p_{12} - a_1 \cdot p_{22}) \cdot \vec{\Phi}_c =
$$
$$
(a_2 \cdot e_1 \cdot p_{11} - a_1 \cdot e_2 \cdot p_{21}) \cdot \vec{I}_0 + (a_2 \cdot e_1 \cdot p_{12} - a_1 \cdot e_2 \cdot p_{22}) \cdot \vec{\Phi}_0
$$

où :

- $p_{ij}$ sont les coefficients de l'inverse d'une matrice P de vecteurs propres définie par la relation suivante A = P · D · P$^{-1}$, où D est la matrice diagonale constituée des valeurs propres $\mu_i$ de la matrice A, P$^{-1}$ est l'inverse de la matrice P, et la matrice A est la matrice d'évolution libre de la machine dans un système linéaire d'équations d'état modélisant le fonctionnement de la machine,
- les coefficients $a_i$ sont les coefficients d'une matrice C définie par la relation suivante C = D$^{-1}$·(e$^{D \cdot T}$-I)·(P$^{-1}$·B), où la matrice I est la matrice unité et la matrice B est la matrice de commande de la machine dans le système linéaire d'équations d'état,
- les vecteurs $\vec{\Phi}_0$ et T$_0$ sont respectivement les vecteurs représentant l'état initial au début de l'intervalle T du courant statorique et du flux magnétique rotorique de la machine,
- les vecteurs I$_c$ et $\vec{\Phi}_c$ sont les vecteurs respectivement de courant de consigne statorique et de flux magnétique de consigne rotorique, et
- les coefficients $e_i$ sont définis par la relation suivante $e_i = e^{\mu_i T}$.

**3.** Procédé selon la revendication 1 ou 2, **caractérisé en ce que** le vecteur moyen de commande est la solution exacte du système discret d'équations d'état de la machine suivant ;

$$
\vec{X}_c = F(T) \cdot \vec{X}_0 + G(T) \cdot \vec{V}
$$

où :

- le vecteur $\vec{X}_0$ est un vecteur d'état définissant l'état initial du courant statorique et du flux magnétique rotorique de la machine au début de l'intervalle T,
- le vecteur $\vec{X}_c$ est un vecteur d'état de consigne définissant le courant de consigne statorique et le flux magnétique de consigne rotorique pour la machine,
- le vecteur $\vec{V}$ est le vecteur moyen de commande de la machine,
- la matrice F(T) est une matrice de transition de la machine définie par la relation F=e$^{A \cdot T}$, où A est la matrice d'évolution libre de la machine dans un système linéaire d'équations d'état modélisant le fonctionnement de la machine, et
- la matrice G(T) est une matrice de commande de la machine dont la valeur est fonction de la valeur de l'intervalle T.

**4.** Procédé selon l'une quelconque des revendications précédentes, **caractérisé en ce que** le vecteur moyen de commande est le résultat de la relation suivante :

$$
\vec{\vec{V}} = e^{i\theta_0} \cdot \frac{e^{\mu_1 \cdot T} \cdot [p_{11}(I_{0d_0} + i \cdot I_{0q_0}) + p_{12} \cdot \Phi_{0d_0}] \cdot [p_{21} \cdot (I_{cd} + i \cdot I_{cq}) + p_{22} \cdot \Phi_{cd}] - e^{\mu_2 \cdot T} \cdot [p_{21} \cdot (I_{0d_0} + i \cdot I_{0q_0}) + p_{22} \cdot \Phi_{0d_0}] \cdot [p_{11} \cdot (I_{cd} + i \cdot I_{cq}) + p_{12} \cdot \Phi_{cd}]}{a_2 \cdot [p_{11} \cdot (I_{cd} + i \cdot I_{cq}) + p_{12} \cdot \Phi_{cd}] - a_1 \cdot [p_{21} \cdot (I_{cd} + i \cdot I_{cc}) + p_{22} \cdot \Phi_{cd}]}
$$

où :

- $\theta_0$ est la position angulaire d'un repère initial dont l'axe des abscisses est aligné sur un vecteur de flux magnétique rotorique initial de la machine au début de l'intervalle T,
- les coefficients $p_{ij}$ sont les coefficients de l'inverse d'une matrice P de vecteurs propres définie par la relation A = P·D·P$^{-1}$, où D est la matrice diagonale constituée des valeurs propres $\mu_i$ de la matrice A, P$^{-1}$ est l'inverse

28

de la matrice P, et la matrice A est la matrice d'évolution libre de la machine dans un système linéaire d'équations d'état modélisant le fonctionnement de la machine,

- $I_{0d_0}$, $I_{0q_0}$ sont les coordonnées du vecteur de courant initial statorique au début de l'intervalle T dans un repère initial dont l'axe des abscisses est aligné sur la direction du vecteur de flux magnétique initial rotorique,

- $\Phi_{0d_0}$, est l'abscisse du vecteur de flux magnétique initial rotorique dans le repère initial,

- $I_{cd}$, $I_{cq}$ sont les coordonnées du vecteur de courant de consigne statorique à la fin de l'intervalle T, dans un repère de consigne dont l'axe des abscisses est aligné sur la direction du vecteur de flux magnétique de consigne rotorique,

- $\Phi_{cd}$ est l'abscisse du vecteur de flux magnétique de consigne rotorique dans le repère de consigne.

5. Procédé selon l'une quelconque des revendications précédentes, dans lequel le courant de consigne statorique admet des coordonnées $I_{cd}$ et $I_{cq}$ à la fin de l'intervalle T, dans un repère de consigne dont l'axe des abscisses est aligné sur la direction du vecteur de flux magnétique de consigne rotorique, et dans lequel la coordonnée $I_{cd}$ est établie à partir de la coordonnée $I_{cq}$ et du flux de consigne statorique.

6. Unité de commande à réponse pile d'une machine électrique tournante asynchrone dans laquelle le flux magnétique rotorique de la machine est commandable à partir du courant d'alimentation statorique de cette machine, **caractérisée en ce que** cette unité comporte :

- un module (30) d'établissement d'un courant de consigne statorique permettant d'atteindre à la fin d'un intervalle T à la fois une consigne de force mécanique et un flux magnétique de consigne rotorique, ce courant de consigne statorique étant établi à partir d'une relation reliant le courant de consigne statorique, le flux magnétique de consigne rotorique, et des valeurs initiales du courant statorique et du flux magnétique rotorique au début de l'intervalle T le vecteur d'état du système linéaire d'équations d'état modélisant le fonctionnement de la machine étant formé d'un vecteur de courant statonique et d'un vecteur de feux magnétique rotorique, et

- un module (32) de calcul d'un vecteur moyen de commande à appliquer continûment pendant l'intervalle T pour obtenir à l'expiration de l'intervalle T un courant statorique égal au courant de consigne statorique établi par le module d'établissement.

7. Support (34) d'enregistrement d'informations, **caractérisé en ce qu'**il comporte des instructions pour l'exécution d'un procédé selon l'une quelconque des revendications 1 à 5, lorsque ces instructions sont exécutées par un calculateur électronique.

**Patentansprüche**

1. Dead-Beat-Steuerverfahren für eine asynchrone elektrische Drehmaschine, ausgestattet mit einem Stator und einem Rotor, bei der der magnetische Fluss der Maschine vom der Versorgungsstrom der Maschine abhängt, wobei das Verfahren darin besteht, einen mittleren Steuervektor kontinuierlich oder im Mittel während eines Zeitintervalls T anzuwenden, der es ermöglicht, eine mechanische Kraft, die von der Maschine erzeugt wird, zu erhalten, die gleich einem vorbestimmten Sollwert der mechanischen Kraft am Ende des Intervalls T ist, dadurch charakterisiert, dass:

- der Zustandsvektor des linearen Zustands-Gleichungssystems, das die Funktion der Maschine modelliert, wird durch einen Stator-Strom-Vektor und einen Rotor-Magnetischer-Fluss-Vektor gebildet wird und

dadurch, dass das Verfahren aufweist:

a) einen Schritt (60) zum Erstellen eines Soll-Statorstroms, der es ermöglicht, am Ende des Intervalls T zugleich den Sollwert der mechanischen Kraft und einen magnetischen Sollfluss des Rotors zu erreichen, wobei der Soll-Statorstrom ausgehend von einem Zusammenhang, der den Soll-Statorstrom, den magnetischen Sollfluss des Rotors und die Startwerte des Statorstroms und des magnetischen Flusses des Rotors zu Beginn des Intervalls T in Verbindung setzt, erstellt wird, und

b) einen Schritt (64) zum Berechnen des mittleren Steuervektors, der während des Intervalls T kontinuierlich anzuwenden ist, um am Ende des Intervalls T einen Statorstrom zu erhalten, der gleich dem in Schritt a) erstellten Soll-Statorstrom ist.

2. Verfahren gemäß Anspruch 1, dadurch charakterisiert, dass der Soll-Statorstrom eine Lösung des folgenden komplexen Zusammenhangs ist:

$$\left(a_2 \cdot p_{11} - a_1 \cdot p_{21}\right) \cdot \dot{\vec{I}}_c + \left(a_2 \cdot p_{12} - a_1 \cdot p_{22}\right) \cdot \dot{\vec{\Phi}}_c =$$
$$\left(a_2 \cdot e_1 \cdot p_{11} - a_1 \cdot e_2 \cdot p_{21}\right) \cdot \dot{\vec{I}}_0 + \left(a_2 \cdot e_1 \cdot p_{12} - a_1 \cdot e_2 \cdot p_{22}\right) \cdot \dot{\vec{\Phi}}_0$$

wobei:

- $p_{ij}$ die Koeffizienten der Inversen einer Eigenvektor-Matrix P sind, die definiert ist durch den folgenden Zusammenhang $A = P \cdot A \cdot P^{-1}$, wobei D die Diagonalmatrix ist, die aus den Eigenwerten $\mu_i$ der Matrix A gebildet ist, $P^{-1}$ die Inverse der Matrix P ist und die Matrix A ist die Matrix des freien Verhaltens der Maschine in einem linearen Zustands-Gleichungssystem, das die Funktion der Maschine modelliert, ist,
- die Koeffizienten $a_i$ die Koeffizienten eine Matrix C ist, die durch den folgenden Zusammenhang definiert ist $C = D^{-1} \cdot (e^{D \cdot T} - I)(P^{-1} \cdot B)$, wobei die Matrix I eine Einheitsmatrix ist und die Matrix B die Steuermatrix der Maschine in dem linearen Zustands-Gleichungssystem ist,
- die Vektoren $\vec{\Phi}_0$ und $\vec{I}_0$ die Vektoren sind, die den Startzustand zu Beginn des Intervalls T des Stator-Stroms bzw. des magnetischen Flusses des Rotors der Maschine repräsentieren,
- die Vektoren $\vec{I}_C$ und $\vec{\Phi}_C$ die Vektoren des Soll-Statorstroms bzw. des magnetischen Sollflusses des Rotors sind und
- die Koeffizienten $e_i$ durch den folgenden Zusammenhang definiert sind $e_i = e^{\mu_i \cdot T}$.

3. Verfahren gemäß dem Anspruch 1 oder 2, dadurch charakterisiert, dass der mittlere Steuervektor eine exakte Lösung des folgenden diskreten Zustands-Gleichungssystems der Maschine ist:

$$\vec{X}_c = F(T) \cdot \vec{X}_0 + G(T) \cdot \vec{\bar{V}}$$

wobei:

- der Vektor $\vec{X}_0$ ein Zustandsvektor ist, der den Startzustand des Statorstroms und des magnetischen Flusses des Rotors der Maschine zu Beginn des Intervalls T definiert,
- der Vektor $\vec{X}_C$ ein Soll-Zustandsvektor ist, der den Soll-Statorstrom und den magnetischen Sollfluss des Rotors für die Maschine definiert,
- der Vektor $\vec{V}$ der mittlere Steuervektor der Maschine ist,
- die Matrix F(T) eine Übergangsmatrix der Maschine ist, die definiert ist durch den Zusammenhang $F = e^{A \cdot T}$, wobei A die Matrix des freien Verhaltens der Maschine in einem linearen Zustands-Gleichungssystem, das die Funktion der Maschine modelliert, ist, und
- die Matrix G(T) eine Steuermatrix der Maschine ist, deren Wert eine Funktion des Werts des Intervalls T ist.

4. Verfahren gemäß einem der vorhergehenden Ansprüche, dadurch charakterisiert, dass der mittlere Steuervektor das Ergebnis des folgenden Zusammenhangs ist:

$$\bar{\bar{V}} = e^{i\theta_0} \cdot \frac{e^{\mu_1 \cdot T} \left[ p_{11}\left(I_{0d_0} + i \cdot I_{0q_0}\right) + p_{12} \cdot \Phi_{0d_0} \right] \cdot \left[ p_{21} \cdot \left(I_{cd} + i \cdot I_{cq}\right) + p_{22} \cdot \Phi_{cd} \right] - e^{\mu_2 \cdot T} \cdot \left[ p_{21} \cdot \left(I_{0d_0} + i \cdot I_{0q_0}\right) + p_{22} \cdot \Phi_{0d_0} \right] \cdot \left[ p_{11} \cdot \left(I_{cd} + i \cdot I_{cq}\right) + p_{12} \cdot \Phi_{cd} \right]}{a_2 \cdot \left[ p_{11} \cdot \left(I_{cd} + i \cdot I_{cq}\right) + p_{12} \cdot \Phi_{cd} \right] - a_1 \cdot \left[ p_{21} \cdot \left(I_{cd} + i \cdot I_{cq}\right) + p_{22} \cdot \Phi_{cd} \right]}$$

wobei

- $\theta_0$ die Winkelposition eines Start-Koordinatensystems ist, dessen Abszissenachse nach einem Start-Rotor-Magnetischer-Fluss-Vektor der Maschine zu Beginn des Intervalls T ausgerichtet ist,
- $p_{ij}$ die Koeffizienten der Inversen einer Eigenvektor-Matrix P sind, die definiert ist durch den folgenden Zusammenhang $A = P \cdot A \cdot P^{-1}$, wobei D die Diagonalmatrix ist, die aus den Eigenwerten $\mu_i$ der Matrix A gebildet ist, $P^{-1}$ die Inverse der Matrix P ist und die Matrix A die Matrix des freien Verhaltens der Maschine in einem linearen Zustands-Gleichungssystem, das die Funktion der Maschine modelliert, ist,

- $I_{0d0}$, $I_{0q0}$ die Koordinaten des Start-Stator-Strom-Vektors zu Beginn des Intervalls T in einem Koordinatensystem, dessen Abszissenachse in der Richtung des Start-Rotor-Magnetischer-Fluss-Vektors ausgerichtet ist, sind,
- $\Phi_{0d_0}$ die Abszisse des Start-Rotor-Magnetischer-Fluss-Vektors in dem Start-Koordinatensystem ist,
- $I_{cd}$, $I_{cq}$ die Koordinaten des Soll-Statorstroms am Ende des Intervalls T in einem Soll-Koordinatensystem, dessen Abszissenachse in der Richtung des Soll-Rotor-Magnetischer-Fluss-Vektors ausgerichtet ist, sind,
- $\Phi_{cd}$ die Abszisse des Start-Rotor-Magnetischer-Fluss-Vektors in dem Soll-Koordinatensystem ist.

5. Verfahren gemäß einem der vorhergehenden Ansprüche, in dem der Soll-Statorstrom am Ende des Intervalls T Koordinaten $I_{cd}$, $I_{cq}$ in einem Koordinatensystem, dessen Abszissenachse in der Richtung des Start-Rotor-Magnetischer-Fluss-Vektors ausgerichtet ist, annimmt, und in dem die Koordinate $I_{cd}$ ausgehend von der Koordinate $I_{cq}$ und dem Soll-Statorfluss erstellt ist.

6. Dead-Beat-Steuereinheit für eine asynchrone elektrische Drehmaschine, bei der der magnetische Fluss der Maschine ausgehend von dem Stator-Versorgungsstroms der Maschine steuerbar ist, dadurch charakterisiert, dass die Einheit aufweist:

- ein Modul (30) zum Erstellen eines Soll-Statorstroms, der es ermöglicht, am Ende des Intervalls T zugleich den Sollwert der mechanischen Kraft und einen magnetischen Sollfluss des Rotors zu erreichen, wobei der Soll-Statorstrom ausgehend von einem Zusammenhang, der den Soll-Statorstrom, den magnetischen Sollfluss des Rotors und die Startwerte des Statorstroms und des magnetischen Flusses des Rotors am Anfang des Intervalls T in Verbindung setzt, erstellt wird, wobei der Zustandsvektor des linearen Zustands-Gleichungssystems, das die Funktion der Maschine modelliert, durch einen Stator-Strom-Vektor und einen Rotor-Magnetischer-Fluss-Vektor gebildet wird, und
- ein Modul (32) zum Berechnen eines mittleren Steuervektors, der während des Intervalls T kontinuierlich anzuwenden ist, um am Ende des Intervalls T einen Statorstrom zu erhalten, der gleich dem von dem Modul zum Erstellen erstellten Soll-Statorstroms ist.

7. Informationsaufzeichnungsträger (34), dadurch charakterisiert, dass es Instruktionen zum Ausführen eines Verfahrens gemäß einem der Ansprüche 1 bis 5 aufweist, wenn diese Instruktionen von einem elektronischen Rechner ausgeführt werden.

**Claims**

1. A deadbeat control method for an asynchronous rotary electrical machine provided with a stator and a rotor in which the magnetic flux of the machine depends on the power supply current of said machine, said method comprises applying an average control vector continuously or as an average value over a time interval T so as to obtain a mechanical force developed by the machine that is equal to a predetermined mechanical force design value at the end of said interval T, **characterised in that**

- the state vector of the linear system of state equations modelling the operation of the machine is formed by a stator current vector and by a rotor magnetic flux vector, and **in that** said method comprises:

a) a step (60) of establishing a stator design current so as to reach, at the end of the time interval T, both the mechanical force design value and a rotor design magnetic flux, said stator design current being established on the basis of a relationship connecting the stator design current, the rotor design magnetic flux and the initial values of the stator current and of the rotor magnetic flux at the start of the interval T, and
b) a step (64) of calculating the average control vector to be continuously applied during the interval T so as to obtain a stator current at the end of said interval T that is equal to the stator design current established during the step a).

2. The method according to claim 1, **characterised in that** the stator design current is a solution of the following complex relationship:

$$\left(a_2 \cdot p_{11} - a_1 \cdot p_{21}\right) \cdot \dot{\vec{I}}_c + \left(a_2 \cdot p_{12} - a_1 \cdot p_{22}\right) \cdot \dot{\vec{\Phi}}_c =$$
$$\left(a_2 \cdot e_1 \cdot p_{11} - a_1 \cdot e_2 \cdot p_{21}\right) \cdot \dot{\vec{I}}_0 + \left(a_2 \cdot e_1 \cdot p_{12} - a_1 \cdot e_2 \cdot p_{22}\right) \cdot \dot{\vec{\Phi}}_0$$

where:

- $p_{ij}$ are the coefficients of the inverse of a matrix P of eigenvectors defined by the following relationship: A = P · D · P$^{-1}$, where D is the diagonal matrix constituted by the eigenvalues $\mu_i$ of the matrix A, P$^{-1}$ is the inverse of the matrix P, and the matrix A is the free evolution matrix of the machine in a linear system of state equations modelling the operation of the machine;
- the coefficients $a_i$ are the coefficients of a matrix C defined by the following relationship: C=D$^{-1}$·(e$^{D.T}$-1).(P$^{-1}$·B), where the matrix I is the unit matrix and the matrix B is the control matrix of the machine in the linear system of state equations;
- the vectors $\vec{\Phi}_0$ and $\vec{I}_0$ are respectively the vectors representing the initial state at the start of the interval T of the stator current and of the rotor magnetic flux of the machine;
- the vectors $\vec{I}_c$ and $\vec{\Phi}_c$ are the vectors of the stator design current and of the rotor design magnetic flux, respectively, and
- the coefficients $e_i$ are defined by the following relationship; $e_i = e^{\mu_i.T}$

3. The method according to claim 1 or 2, **characterised in that** the average control vector is the exact solution of the following discrete system of state equations of the machine:

$$\vec{X}_c = F(T) \cdot \vec{X}_0 + G(T) \cdot \vec{V}$$

where:

- the vector $\vec{X}_0$ is a state vector defining the initial state of the stator current and of the rotor magnetic flux of the machine at the start of the interval T;
- the vector $\vec{X}_c$ is a design state vector defining the stator design current and the rotor design magnetic flux for the machine;
- the vector $\vec{V}$ is the average control vector of the machine;
- the matrix F(T) is a transition matrix of the machine defined by the relationship F=e$^{A.T}$, where A is the free evolution matrix of the machine in a linear system of state equations modelling the operation of the machine; and
- the matrix G(T) is a control matrix of the machine, the value of which depends on the value of the interval T.

4. The method according to any one of the preceding claims, **characterised in that** the average control vector is the result of the following relationship:

$$\vec{\vec{V}} = e^{j\theta_0} \cdot \frac{e^{\mu_2 \cdot T} \left[ p_{11}\left(I_{0d_0} + i \cdot I_{0q_0}\right) + p_{12} \cdot \Phi_{0d_0} \right] \left[ p_{21} \cdot \left(I_{cd} + i \cdot I_{cq}\right) + p_{22} \cdot \Phi_{cd} \right] - e^{\mu_1 \cdot T} \left[ p_{21} \cdot \left(I_{0d_0} + i \cdot I_{0q_0}\right) + p_{22} \cdot \Phi_{0d_0} \right] \left[ p_{11} \cdot \left(I_{cd} + i \cdot I_{cq}\right) + p_{12} \cdot \Phi_{cd} \right]}{a_2 \cdot \left[ p_{11} \cdot \left(I_{cd} + i \cdot I_{cq}\right) + p_{12} \cdot \Phi_{cd} \right] - a_1 \cdot \left[ p_{21} \cdot \left(I_{cd} + i \cdot I_{cq}\right) + p_{22} \cdot \Phi_{cd} \right]}$$

where:

- $\theta_0$ is the angular position of an initial reference, the axis of abscissa of which is aligned with an initial rotor magnetic flux vector of the machine at the start of the interval T;
- the coefficients $p_{ij}$ are the coefficients of the inverse of a matrix P of eigenvectors defined by the following relationship: A = P · D · P$^{-1}$, where D is the diagonal matrix constituted by the eigenvalues $\mu_i$ of the matrix A, P$^{-1}$ is the inverse of the matrix P, and the matrix A is the free evolution matrix of the machine in a linear system of state equations modelling the operation of the machine;

- $I_{0d0}$, $I_{0q0}$ are the coordinates of the initial stator current vector at the start of the interval T in an initial reference, the axis of abscissa of which is aligned with the direction of the initial rotor magnetic flux vector;

- $\Phi_{0d_0}$, is the abscissa of the initial rotor magnetic flux vector in the initial reference;

- $I_{cd}$, $I_{cq}$ are the coordinates of the stator design current vector at the end of the interval T in a design reference, the axis of abscissa of which is aligned with the direction of the rotor design magnetic flux vector;

- $\Phi_{cd}$ is the abscissa of the rotor design magnetic flux vector in the design reference.

5. The method according to any one of the preceding claims, wherein the stator design current admits coordinates $I_{cd}$ and $I_{cq}$ at the end of the interval T in a design reference, the axis of abscissa of which is aligned with the direction of the rotor design magnetic flux vector, and wherein the coordinate $I_{cd}$ is established on the basis of the coordinate $I_{cq}$ and of the stator design flux.

6. A deadbeat control unit for an asynchronous rotary electrical machine in which the rotor magnetic flux of the machine can be controlled from the stator power supply current of said machine, **characterised in that** said unit comprises:

- a module (30) for establishing a stator design current so as to reach, at the end of an interval T, both a mechanical force design value and a rotor design magnetic flux, said stator design current being established on the basis of a relationship connecting said stator design current, said rotor design magnetic flux and initial values of the stator current and of the rotor magnetic flux at the start of the interval T, with the state vector of the linear system of state equations modelling the operation of the machine being formed by a stator current vector and by a rotor magnetic flux vector; and

- a module (32) for calculating an average control vector to be continuously applied during the interval T so as to obtain, at the end of said interval T, a stator current equal to the stator design current established by the establishing module.

7. A support (34) for recording information, **characterised in that** it comprises instructions for executing a method according to any one of claims 1 to 5, when said instructions are executed by an electronic computer.

$$\omega_s \cdot \frac{L_m}{L_r} \cdot \vec{\Phi}_r$$

$$\vec{I}_s \quad R_s \quad \lambda_s = \sigma \cdot L_s$$

$$\vec{I}_f \qquad \vec{I}_c$$

$$\vec{V} \qquad L_s \left( \lambda_m = (1-\sigma) \cdot L_s \right.$$

$$\frac{R_r}{g} \cdot \left( \frac{L_m}{L_r} \right)^2$$

## FIG.1

## FIG.2A

**FIG.2B**

_FIG.3_

EP 1 727 272 B1

## FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1045514 A

**Littérature non-brevet citée dans la description**

- **SHENG-MING YANG et al.** A current control technique for Voltage-Fed Induction Mortor drives. *industrial Electronics Society, 1999 IECON'99 Proceedings, the 25th annual conference of the IEEE,* 29 Novembre 1999